# EUROPÄISCHE PATENTSCHRIFT

(11) **EP 3 469 897 B1**
(45) Veröffentlichungstag und Bekanntmachung des Hinweises auf die Patenterteilung: **06.03.2024**
(21) Anmeldenummer: 18195002.3
(22) Anmeldetag: 18.09.2018
(51) Int. Cl.: A01M 7/00

(54) **LANDWIRTSCHAFTLICHE VERTEILMASCHINE UND VERFAHREN ZUR STEUERUNG EINER DERARTIGEN VERTEILMASCHINE**
AGRICULTURAL DISTRIBUTOR AND METHOD FOR CONTROLLING SUCH A DISTRIBUTOR
MACHINE D'ÉPANDAGE AGRICOLE ET PROCÉDÉ DE COMMANDE D'UNE TELLE MACHINE D'ÉPANDAGE

(30) Priorität: 27.09.2017 DE 102017122418
(43) Veröffentlichungstag der Anmeldung: 17.04.2019
(73) Patentinhaber: HORSCH LEEB Application Systems GmbH, 94405 Landau an der Isar (DE)
(72) Erfinder: LEEB, Theodor, 94562 Oberpöring (DE); ZINK, Florian, 94562 Oberpöring (DE)
(74) Vertreter: Benninger, Johannes

(56) Entgegenhaltungen:
- EP-A1- 2 510 784
- EP-A1- 2 835 050
- EP-A1- 3 372 078
- EP-A2- 2 918 157
- WO-A1-2012/041743
- US-A1- 2014 074 360
- US-A1- 2016 243 575

## Beschreibung

Die vorliegende Erfindung betrifft eine landwirtschaftliche Verteilmaschine zum Ausbringen von Flüssigkeiten und/oder körnigen oder granulierten Stoffen mit den Merkmalen des Oberbegriffs des unabhängigen Anspruchs 1. Die Erfindung betrifft zudem ein Verfahren zur Steuerung und/oder Regelung einer Verteilmaschine mit den Merkmalen des Oberbegriffs des unabhängigen Verfahrensanspruchs 14.

In der Landwirtschaft finden verschiedenste Ausführungsformen von Verteilmaschinen zum Ausbringen von unterschiedlichsten Wirkstoffen wie Flüssigkeiten und/oder körnigen oder granulierten Stoffen Verwendung. Häufig werden derartige landwirtschaftliche Verteilmaschinen auch als Feldspritzen bezeichnet. Zur Verteilung der jeweiligen Wirkstoffe besitzen die Verteilmaschinen in der Regel eine sich in Arbeitsposition quer zur Fahrtrichtung erstreckende Verteilvorrichtung. Die Verteilmaschinen können sowohl als selbstfahrende oder auch als an einem Zugfahrzeug angehängte oder angebaute Verteilmaschinen ausgebildet sein. Zudem gibt es darüber hinaus bereits erste Lösungsansätze, um derartige Verteilmaschinen auch als autonome Fahrzeuge bzw. Verteilmaschinen zu bauen. Die Verteilvorrichtungen bzw. die auch als Spritzgestänge bezeichneten Verteilvorrichtungen weisen mitunter große Arbeitsbreiten von zwanzig Metern und mehr auf. Solche Verteilvorrichtungen sind zumeist in mehrere Gestängesegmente unterteilt, die jeweils um aufrechte Achsen schwenkbar zueinander angeordnet sind, so dass sie u.a. für eine Transportfahrt um diese aufrechte Achsen in eine für die Transportfahrt maximal zulässige Transportbreite zusammengeklappt werden können.

Eine derartige Verteilmaschine geht bspw. aus der EP 2 829 177 B1 hervor. Diese bekannte landwirtschaftliche Verteilmaschine dient dem Ausbringen von flüssigen und/oder festen Wirkstoffen und umfasst u.a. eine quer zur Fahrrichtung angeordnete Verteilvorrichtung mit einem Mittelteil und über vertikale bzw. aufrechte Schwenk- und Drehachsen am Mittelteil drehbar gelagerte seitliche Sektionen, wobei die Schwenk- und Drehachsen mit Dämpfungselementen versehen sind und zwischen dem Mittelteil und den seitlichen Sektionen Mittel zur Reduzierung eines Federweges der seitlichen Sektionen angeordnet sind. Um die jeweiligen Dämpfungselemente auf Basis von Fahrbewegungen regeln zu können, ist vorgesehen, dass die Dämpfungselemente in Abhängigkeit von der jeweils aktuellen Bewegungsart der Verteilmaschine über eine Regeleinheit ansteuerbar bzw. regelbar sind. Somit können die durch vertikale Schwenkbewegungen bzw. durch Gier- und Nickbewegungen hervorgerufenen Beschädigungen der Verteilvorrichtung verhindert werden. Eine kontrollierte Verstellung bzw. Verschwenkung der Verteilvorrichtung oder deren Gestängesegmente, bspw. um Ecken einer Ackerfläche bearbeiten zu können, ist nicht vorgesehen.

Vergleichbare Systeme gehen aus der EP 2 835 050 A1 sowie der EP 2 837 285 A1 hervor. Um vertikale Schwingungen der Verteilvorrichtung zu reduzieren, sind Mittel zur Erfassung dieser Schwingungen vorgesehen. Bei den Mitteln kann es sich insbesondere um ein Kamerasystem handeln. Auf Basis der mittels der Kamera erfassten Hub-, Gier- und Wankbewegungen werden die optimalen Schritte zur Korrektur und Optimierung der Bewegungen der Verteilvorrichtung hergeleitet, wobei hierfür wiederum die Wankbewegungen, insbesondere mittels eines mit elektrischer Energie betriebenen Dämpfersystems, geregelt werden. Auch dieses System sieht keine kontrollierte Verstellung der Verteilvorrichtung, bspw. um Ecken oder Kurven einer Ackerfläche bearbeiten zu können, sowie keine Berücksichtigung von Grenzen und Randstrukturen der Ackerfläche vor.

Ein Verfahren zur Korrektur von in einem Speicher eines Arbeitsrechners einer landwirtschaftlichen Verteilmaschine gespeicherter, bspw. mittels eines GPS-Systems aufgezeichneter Positionskoordinaten geht aus der EP 2 983 010 A1 hervor. Das hierin beschriebene Verfahren soll sich durch zwei vorzugsweise senkrecht zueinander orientierte Verschiebeoperationen der gespeicherten Positionskoordinaten relativ zur aktuellen Position auszeichnen, wobei die erste dieser Verschiebeoperationen auf Grund von Lage und/oder Bewegungsrichtungsdaten der Arbeitsmaschine, vorzugsweise bestimmt auf Basis der Fahrtrichtung, vorgenommen wird. Somit kann zwar die aktuelle Positionsbestimmung der Maschine verbessert werden, eine kontrollierte Verstellung der Verteilvorrichtung, bspw. um Ecken oder Spitzen oder Kurven oder dergl. einer Ackerfläche bearbeiten zu können sieht das Verfahren ebenso nicht vor.

Aus der EP 1 840 690 A2 geht darüber hinaus ein Verfahren zur Erstellung eines Routenplans für eine Gruppe von landwirtschaftlichen Maschinen für die Bearbeitung einer Ackerfläche hervor. Das Routenplanungssystem umfasst hierfür Positionsermittlungseinrichtungen, um eine aktuelle Position der betreffenden Verteilmaschinen zu ermitteln, Routenplanungsdaten-Ermittlungseinrichtungen, um die notwendigen Routenplanungsdaten zur Verfügung zu stellen, bspw. durch automatische Erfassung der Positionsdaten, sowie weiterer Zusatzinformationen und/oder durch Eingabe durch einen Bediener, sowie Kommunikationseinrichtungen, um die Routenplanungsdaten zur versenden. Durch das beschriebene Verfahren sollen möglichst viele landwirtschaftliche Maschinen ungehindert gleichzeitig auf einer Ackerfläche arbeiten können. Zudem sieht das Verfahren vor, dass Sicherheitsbereiche definiert werden können, bspw. an Straßenrändern, in welchen die landwirtschaftlichen Maschinen nicht fahren können. Derartige Sicherheitsbereiche sind jedoch für eine Verteilung von Pflanzenschutzmitteln nicht akzeptabel, da durch derartige Bereiche somit keine gewünschte gleichmäßige Pflanzenschutzmaßnahme über den gesamten Pflanzenbestand erreicht wird. Zudem erfolgt die Definition der optimalen Route alleine unter dem Aspekt der Fahrwege bzw. der Fahrspuren der jeweiligen Maschinen, ohne Berücksichtigung einer optimalen ganzflächigen Bearbeitung bzw. Behandlung der landwirtschaftlichen Fläche, auch finden Ecken und Randstrukturen der landwirtschaftlichen Fläche keine Berücksichtigung zur Ansteuerung von Verteilvorrichtungen oder Arbeitsvorrichtungen der landwirtschaftlichen Maschinen.

Eine Verteilmaschine mit einem verbesserten System zur Teilbreitensteuerung geht aus der EP 2 918 157 B1 hervor. Um Doppelbehandlungen bei Kurvenfahrten oder am Vorgewende zu vermeiden, sieht das System einen Winkelsensor vor, der den Winkel zwischen einem Zugfahrzeug und der Verteilvorrichtung messen kann. Zudem umfasst die Verteilmaschine einen Positionssensor, der die Position eines Zugfahrzeuges der Verteilmaschine bzw. die Position der Verteilmaschine messen kann und somit die Teilbreiten der Verteilvorrichtung in Abhängigkeit der Position und des Winkels jeweils entsprechend geschaltet werden. Eine aktive Veränderung der Position bzw. des Winkels der Verteilvorrichtung in Bezug auf die Verteilmaschine, um bspw. bestimmte Ackerbereiche bearbeiten zu können, sieht das System nicht vor.

Darüber hinaus zeigt die EP 1 716 754 B1 eine landwirtschaftliche Verteilmaschine mit einem Rahmen und einem auf dem Rahmen angeordneten Vorratsbehälter sowie mit einer an dem Rahmen mittels einer Aufhängevorrichtung angeordneten Verteilvorrichtung, welche um eine aufrechte Achse gegenüber dem Rahmen verschwenkbar aufgehängt ist, wobei zwischen dem Rahmen und der Verteilvorrichtung zumindest ein von vorzugsweise einer elektronischen Regeleinrichtung ansteuerbares motorisches Stellglied zum Verstellen des Verteilergestänges um die aufrechte Achse vorgesehen ist, sowie das Mittel vorhanden sind, mittels denen die Verteilvorrichtung mittels des Stellglieds stets rechtwinklig zur Sollrichtung bzw. zur Fahrspur der Verteilmaschine ausgerichtet wird, d.h. das insbesondere auch bei einer Kurvenfahrt die Verteilvorrichtung stets rechtwinkelig zum Rahmen bzw. zur Fahrtrichtung der Verteilmaschine ausgerichtet ist, wodurch es nicht möglich ist, Ecken oder Spitzen oder Kurven oder dergl. einer Ackerfläche auch zu behandeln. Zudem wird jeweils die gesamte Verteilvorrichtung entsprechend verschwenkt, was wiederum zu fehlerbehafteten Behandlungen führen kann. Auch erfolgt hierbei das Verschwenken der Verteilvorrichtung einzig auf Basis der erfassten Position bzw. der jeweiligen Sollrichtung, wodurch die Verteilvorrichtung mitunter schnell verschwenkt wird. Hierdurch kann es jedoch wiederum zu Fehlbehandlungen kommen, da durch die Verschwenkung der gesamten Verteilvorrichtung mitunter manche Teilbereiche doppelt und manche Teilbereiche mit zu wenig Wirkstoffen behandelt werden, was zudem durch die unkontrollierte Geschwindigkeit noch weiter verschlechtert wird.

Eine weitere landwirtschaftliche Verteilmaschine mit einer dynamischen Einstellung der Ausleger ist durch die US 2014/0074360 A1 offenbart. Zur Erfassung des Abstands zwischen Gestänge und Bestand können an den Auslegern Abstandssensoren vorgesehen sein, so dass in Abhängigkeit davon die Höhe der Ausleger eingestellt wird. Wahlweise kann an den Auslegern ein Vorausschau-Modul (LAM) vorgesehen sein, um die Notwendigkeit der Anpassung der Ausleger vorauszusehen. Die mittels der Sensoren erfassten Werte können dazu dienen, durch Bereitstellung von Echtzeit-Daten topografische Karten oder dergleichen zu aktualisieren.

Eine weitere landwirtschaftliche Verteilmaschine geht aus der EP 2 510 784 A1 hervor. Die hier offenbarte Verteilmaschine umfasst ein Verteilergestänge mit variabler Faltgeschwindigkeit. Das Verteilergestänge ist über mehrere Gestängeabschnitte gelenkig miteinander verbunden und kann jeweils mittels motorischer Stellelemente in eine erste und in eine zweite Klappstellung gebracht werden. Im Bereich der Gelenke können Sensoren zur Erfassung der Positionen der zueinander einklappbaren Gestängeabschnitten angeordnet sein. Die Sensoren erzeugen entsprechende Positionssignale, welche an eine Steuervorrichtung übertragen werden. Die Steuervorrichtung ist derart ausgebildet, dass in Abhängigkeit der Positionssignale bezüglich der Stellung der zueinander einklappbaren Gestängeabschnitte zueinander die von den motorischen Stellelementen erzeugte Klappgeschwindigkeit veränderbar ist. So ist beispielsweise zu Beginn des Klappvorgangs eine Beschleunigungsphase der Klappbewegung und zum Ende des Klappvorgangs eine Verzögerungsphase der Klappbewegung vorgesehen. Um das Ein- und Ausklappen der Gestängeabschnitte an verschiedene Einsatzbedingungen anzupassen, ist vorgesehen, dass die Steuervorrichtung Einstellelemente aufweist. Mittels der Einstellelemente ist die von den motorischen Stellelementen erzeugte Klappgeschwindigkeit einstellbar.

Die Offenlegungsschrift US 2016/0243575 A1 beschreibt ein landwirtschaftliches Transportfahrzeug mit einem Spritzgestänge bzw. mit einer Auslegeranordnung. Das Spritzgestänge ist mittels eines Rahmens an einer Rückseite des Transportfahrzeuges verschwenkbar aufgehängt. Zudem ist die Auslegeranordnung an bzw. in einem Schlitten integriert, wodurch das Spritzgestänge horizontal bzw. seitlich verschoben werden kann. Das seitliche Verschieben des Spritzgestänges erfolgt in Abhängigkeit von GPS-Koordinaten, um dadurch das Feld gleichmäßig durch die Auslegeranordnung mit einer Flüssigkeit oder dergleichen zu besprühen. Dabei soll verhindert werden, dass Flächen doppelt besprüht oder nicht besprüht werden.

Somit sind aus dem Stand der Technik verschiedenste Systeme bekannt, um insbesondere die Dämpfungseigenschaften einer Verteilvorrichtung zu beeinflussen, sowie um eine Verteilvorrichtung um eine aufrechte Achse zu verschwenken. Auch ist es bekannt, verschiedenste Fahrspuren zu definieren, entlang derer die Verteilmaschinen jeweils geführt werden. Um jedoch eine exakte Bearbeitung bzw. Behandlung einer Ackerfläche zu gewährleisten, ist es auch erforderlich, die Ecken und Spitzen oder Kurven oder dergl. exakt zu bearbeiten d.h. dass die komplette Ackerfläche bearbeitet wird und keine Fehlstellen bzw. sog. Spritzfenster vorhanden sind, da an unbehandelten Flächen Unkräuter wachsen können, welche sich wiederum entsprechend vermehren und zudem überbehandelte Flächen Resistenzen erzeugen können. Dies ist jedoch insbesondere bei Verteilmaschinen mit Verteilvorrichtungen mit einer großen Arbeitsbreite von 20 Meter und mehr nicht ohne weiteres möglich, da es bislang erforderlich war, die jeweiligen Ecken durch eine Rückwärtsfahrt auszufahren und anschließend diese zu bearbeiten bzw. zu behandeln oder einzelne Gestängesegmente einzuklappen. Da jedoch bei großen Arbeitsbreiten bereits geringste Lenkwinkelveränderungen zu großen Auslenkungen der Verteilvorrichtung führen, ist dies nicht immer ohne weiteres möglich, insbesondere wenn es sich um keine rechtwinkligen Ecken handelt, sondern um stumpfe oder spitze Winkel aufweisende Ecken. Um diese exakt zu bearbeiten bzw. zu behandeln, kommt es immer wieder vor, dass durch das jeweilige Rangieren bei der Rückwärtsfahrt der Pflanzenbestand beschädigt wird bzw. viele Pflanzen überfahren werden. Insbesondere ist für das jeweilige Rangieren auch ein großes fahrerisches Geschick einer Bedienperson erforderlich. Auch besteht ein weiteres Problem bei den aus dem Stand der Technik bekannt gewordenen Verteilmaschinen darin, dass diese, wenn sie entlang einer Fahrspur geführt werden, die Ränder der Ackerfläche nicht mehr exakt bearbeiten können, da die Verteilvorrichtung jeweils auf Basis der Ausrichtung der Verteilmaschine verschwenkt wird, wobei die Ausrichtung der Verteilmaschine jedoch abweichend zu einer Randstruktur der Ackerfläche ist.

Der Erfindung liegt somit die Aufgabe zugrunde, eine landwirtschaftliche Verteilmaschine mit einer Verteilvorrichtung mit großer Arbeitsbreite zu schaffen, mit der es vereinfacht wird, auch stumpfe oder spitze oder rechte Winkel aufweisende Ecken und kurvenreiche Grenzen bzw. Randstrukturen einer Ackerfläche zu bearbeiten bzw. zu behandeln, ohne hierbei den Pflanzenbestand zu beschädigen und gleichzeitig Doppelbehandlungen weitgehend zu vermeiden.

Diese Aufgaben der Erfindung werden durch eine landwirtschaftliche Verteilmaschine zum Ausbringen von Flüssigkeiten und/oder körnigen oder granulierten Stoffen mit den Merkmalen des Anspruchs 1 sowie durch ein Verfahren zur Steuerung und Regelung einer Verteilmaschine mit den Merkmalen des Verfahrensanspruchs 14 gelöst. Weitere vorteilhafte Ausgestaltungen und Weiterbildungen der Erfindung sind in den jeweiligen abhängigen Ansprüchen angegeben.

Zur Lösung der genannten Aufgaben schlägt die Erfindung eine landwirtschaftliche Verteilmaschine vor. Die landwirtschaftliche Verteilmaschine kann hierbei als selbstfahrende oder als mittel Zugfahrzeug gezogene oder als eine an einem Zugfahrzeug angebaute Verteilmaschine ausgeführt sein. Auch kann die Verteilmaschine als ein autonomes Fahrzeug ausgeführt sein, bzw. eine autonome Verteilmaschine mit Verteilvorrichtung sein. Die Verteilmaschine umfasst zumindest einen Rahmen zum Tragen der jeweiligen Komponenten, einen Vorratsbehälter oder mehrere Vorratsbehälter zum Mitführen und Bereitstellen des jeweiligen Verteilguts sowie eine sich in einer Arbeitsposition quer zur Fahrtrichtung erstreckende Verteilvorrichtung, an welcher Verteilvorrichtung nach unten gerichtete Ausbringdüsen zum Ausbringen und Verteilen der jeweiligen Flüssigkeiten und/oder der körnigen oder granulierten Stoffe angebracht sind.

Die Verteilvorrichtung ist beweglich am Rahmen angeordnet, wobei die Verteilvorrichtung hierfür bspw. mittels eines Parallelogramms oder mittels eines Linearschlittens auch in dessen Höhe verstellbar zum Rahmen angebracht, aber auch direkt am Rahmen angebaut sein kann. Zum besseren Verständnis wird im nachfolgenden die Anbringung der Verteilvorrichtung jeweils nur auf den Rahmen bezogen, wobei dadurch jedoch eine Verbindung bspw. mittels eines Parallelogramms oder dergl. Zwischenrahmen zwischen der Verteilvorrichtung und dem Rahmen nicht ausgeschlossen ist, sondern sich die Bezeichnung Rahmen gleichermaßen auch auf derartige Ausführungsformen bezieht bzw. derartige Ausführungsformen beinhaltet, d.h. bei Anbringung der Verteilvorrichtung auf den bzw. am Rahmen kann eine Verbindung mittels eines Parallelogramms oder eines anderen Zwischensegments oder Zwischenrahmens nicht ausgeschlossen sein.

Zudem kann die Verteilvorrichtung in mehrere Gestängesegmente unterteilt sein, bspw. in ein Mittelteil und zwei, vorzugsweise links und rechts vom Mittelteil befindliche, über aufrechte Achsen schwenkbar an diesem angebaute Seitenteile, wobei auch wiederum die Seitenteile aus mehreren ebenfalls mittels aufrechter Achsen schwenkbar zueinander angeordneter Gestängesegmente zusammengesetzt sein können. Beispielsweise kann sich ein Gestänge einer Verteilmaschine aus insgesamt elf Gestängesegmenten zusammensetzen, welche jeweils um aufrechte Achsen zueinander verschwenkbar sind. Es wäre auch jegliche weitere Anzahl an Gestängesegmenten denkbar.

Zudem kann auch die Verteilvorrichtung bzw. dessen Mittelteil um eine aufrechte Achse schwenkbar am Rahmen bzw. an einem dem Rahmen zugeordneten Parallelogramm oder Linearschlitten oder dergleichen angebracht sein, d.h. dass dadurch die gesamte Verteilvorrichtung entsprechend verschwenkt werden könnte. Das Verschwenken der jeweiligen Gestängesegmente bzw. der Verteilvorrichtung um die aufrechten Achsen erfolgt mittels zumindest eines von einer elektronischen Regeleinrichtung ansteuerbaren motorischen Stellgliedes. Zudem sind den Gestängesegmenten und/oder den aufrechten Achsen und/oder dem zumindest einen motorischen Stellglied Sensoren derartig zugeordnet, dass diese jeweils einen Istwert bezüglich der vorhandenen Ausrichtung bzw. der aktuellen Relativposition erfassen und an eine Regeleinrichtung weiterleiten bzw. ausgeben können. Mittels des Sensors bzw. der Sensoren wird somit bspw. erfasst, welche Winkel die jeweiligen Gestängesegmente zueinander aufweisen oder welchen Winkel die Verteilvorrichtung oder dessen Mittelteil in Bezug auf den Rahmen aufweist.

Um eine landwirtschaftliche Verteilmaschine mit einer Verteilvorrichtung mit großer Arbeitsbreite zu schaffen, mit der es vereinfacht wird auch stumpfe oder spitze oder rechte Winkel aufweisende Ecken und kurvenreiche Grenzen bzw. Randstrukturen einer Ackerfläche zu bearbeiten bzw. zu behandeln, ohne hierbei den Pflanzenbestand zu beschädigen und gleichzeitig Doppelbehandlungen weitgehend zu vermeiden, ist vorgesehen, dass zur Erfassung und/oder Auswertung einer vorhandenen Randstruktur der Verteilmaschine zugeordnet und/oder mit einer Regeleinrichtung dieser in Verbindung stehend Konturermittlungseinrichtungen vorgesehen sind, und dass eine Ansteuerung des zumindest einen motorischen Stellglieds zur Verschwenkung der Verteilvorrichtung und/oder deren Gestängesegmente in Abhängigkeit einer erfassten aktuellen Ausrichtung bzw. Relativposition der Verteilvorrichtung und/oder deren Gestängesegmente und der jeweils vorhandenen bzw. erfassten Randstruktur erfolgt.

Hierbei ist vorgesehen, dass eine Randstruktur anhand eines mittels eines Gyroskops ermittelten Kurvenradius mittels eines in der Regeleinrichtung hinterlegten Steuerungsprogramms berechenbar ist. Eine Ansteuerung des zumindest einen Stellgliedes ist vorgesehen bzw. erfolgt in Abhängigkeit von einer erfassten Ausrichtung der Verteilvorrichtung und/oder der Gestängesegmente und der erfassten bzw. vorhandenen Randstruktur.

Wahlweise kann jedoch auch vorgesehen sein, dass die Konturermittlungseinrichtungen lediglich Signale an die Regeleinrichtung übermitteln, so dass mittels eines in der Regeleinrichtung hinterlegten Steuerungsprogramms eine Randstruktur entsprechend generiert bzw. ausgewertet werden kann. Auch könnte die Konturermittlungseinrichtung eine Datenbank sein bzw. mit einer Datenbank in Verbindung stehen.

Durch die erfindungsgemäße Verteilmaschine bzw. durch deren Verteilvorrichtung wird mittels des Stellgliedes die Verteilvorrichtung bzw. deren Gestängesegmente jeweils derartig zueinander verschwenkt, dass diese eine zumindest weitgehend parallele und/oder rechtwinkelige Ausrichtung zur erfassten bzw. vorhandenen Randstruktur aufweisen, wodurch jeweils vorhandene Ecken bzw. Randstrukturen mit verschiedensten Winkel und Kurven entsprechend ganzflächig behandelt werden können und zudem Doppelbehandlungen weitgehend vermieden werden können.

Es sei darauf hingewiesen, dass der Begriff rechtwinkelig bei einer eine Kurve aufweisenden Randstruktur derartig zu verstehen ist, dass die Verteilvorrichtung bzw. deren Gestängesegmente der Kurve jeweils zumindest annähernd oder exakt im Lot der Kurve folgen können.

Bei den Sensoren zur Erfassung der jeweiligen Ausrichtung bzw. der jeweiligen Relativposition kann es sich insbesondere um Winkelpotentiometer oder Winkelsensoren oder Positionssensoren oder dergl. Sensoren handeln. Auch Linearmesssysteme wären denkbar bzw. einsetzbar. Generell wären somit jegliche Sensoren denkbar, mittels denen eine aktuelle Ausrichtung erfasst bzw. ermittelt werden kann. Die Sensoren können die jeweilige Relativposition der Verteilvorrichtung bzw. deren Gestängesegmente entsprechend erfassen und an die Regeleinrichtung übermitteln. Alternativ könnten die Sensoren jedoch auch nur Signale an die Regeleinrichtung übermitteln. Die entsprechenden Signale können anschließend mittels eines in der Regeleinrichtung hinterlegten Steuerungsprogramms in entsprechende Werte der Relativpositionen umgewandelt werden.

Um dies noch weiter zu verbessern, könnte der Verteilmaschine zumindest ein aus wenigstens zwei Rädern gebildetes Fahrwerk bzw. eine oder mehrere lenkbare Achsen zugeordnet sein, wobei die Räder wiederum über aufrechte Achsen schwenkbar bzw. lenkbar zum Rahmen angeordnet sein können, und wobei zur Lenkung wiederum zumindest ein von einer elektronischen Regeleinrichtung ansteuerbares motorisches Stellglied vorgesehen sein kann. Hierbei können auch wiederum dem Fahrwerk und/oder den aufrechten Achsen und/oder dem motorischen Stellglied Sensoren derartig zugeordnet sein, dass diese jeweils einen Istwert bzgl. der vorhandenen Ausrichtung bzw. der aktuellen Relativposition Erfassen und an eine Regeleinrichtung weiterleiten bzw. ausgeben können. Auch kann anhand der vorhandenen Randstruktur wiederum die Lenkung bzw. das motorische Stellglied der Lenkung bzw. des Fahrwerks oder der Achse entsprechend gesteuert werden.

Auch könnte bei einer Ausführungsvariante der landwirtschaftlichen Verteilmaschine als mittels eines Zugfahrzeuges gezogene Verteilmaschine, diese zur Verbindung mit dem Zugfahrzeug eine Zugvorrichtung bzw. Zugdeichsel aufweisen, wobei auch wiederum die Zugvorrichtung um eine aufrechte Achse schwenkbar bzw. lenkbar zum Rahmen angebracht sein kann und ebenso wiederum mittels zumindest eines motorischen Stellgliedes eine Position bzw. Ausrichtung der Zugdeichsel in Bezug auf den Rahmen verändert werden kann um somit wiederum die Verteilmaschine zu lenken. Auch hierbei können Sensoren vorgesehen sein, die eine aktuelle Ausrichtung der Zugvorrichtung in Bezug auf den Rahmen und/oder des Zugfahrzeugs erfassen und die Verteilmaschine somit wiederum in Abhängigkeit einer vorhandenen Randstruktur und einer erfassten Relativposition bzw. Ausrichtung das Stellglied entsprechend angesteuert werden. Auch könnten die Räder bzw. die Achsen und die Zugdeichsel gelenkt werden.

Die Verteilmaschine kann jeweils entlang einer definierbaren bzw. einer definierten Fahrspur geführt werden; d.h. dass bspw. die Räder oder die Zugvorrichtung bzw. die Verteilmaschine derartig gelenkt wird, dass diese einer Fahrspur folgt, wodurch wiederum ein Überfahren von Pflanzen verhindert bzw. verringert werden kann. So können zur Erfassung und/oder Auswertung einer Fahrspur der Verteilmaschine zugeordnet und/oder mit einer Regeleinrichtung in Verbindung stehend Spurermittlungseinrichtungen vorgesehen sein, mittels welcher Spurermittlungseinrichtungen die jeweiligen Fahrspuren erfasst und/oder ausgewertet werden. Als Fahrspuren können bspw. sog. Fahrgassen verwendet werden, welche mittels zusätzlicher Messmittel erfasst werden können oder deren Daten in der Regeleinrichtung hinterlegt sein können. Auch könnten als Spurermittlungseinrichtungen ein Laserscanner und/oder eine Kamera bzw. ein Kamerasystem und/oder ein Radarsensor vorgesehen sein. Ebenso könnte zur Spurermittlung ein GPS-System an der Verteilmaschine vorgesehen sein. Ebenso wäre es denkbar, dass die jeweiligen Fahrspuren aus einer Datenbank ausgelesen werden oder dass die Fahrspur anhand eines ermittelten Kurvenradius mittels eines in der Regeleinrichtung hinterlegten Steuerungsprogramms berechnet wird.

Auch könnte in einer Weiterbildung der Erfindung vorgesehen sein, dass in Abhängigkeit der erfassten bzw. der vorhandenen Randstruktur und der aktuell ermittelten Ausrichtung der Verteilmaschine bzw. der Verteilvorrichtung oder deren Gestängesegmente jeweils mittels einer Anzeigevorrichtung Hinweise über mögliche Korrekturbewegungen der Lenkung der Verteilmaschine ausgegeben und angezeigt werden. Zudem könnte vorgesehen sein, dass die Verteilmaschine die jeweilige Anpassung der Verteilvorrichtung und/oder der Gestängesegmente sowie der jeweiligen Lenkung und der Fahrbewegungen autonom durchführt, insbesondere ohne jeglichen Eingriff durch eine Bedienperson. Insofern die Verteilmaschine an ein Zugfahrzeug angebaut bzw. mit dieser verbunden ist, könnte auch vorgesehen sein, dass das Zugfahrzeug bzw. deren Steuerungseinheit mit der Regeleinrichtung der Verteilmaschine in Verbindung steht und wiederum das Zugfahrzeug bzw. deren Lenken und/oder deren Antriebseinheit entsprechend autonom bzw. automatisch auf Basis der vorhandenen Randstruktur und der erfassten aktuellen Relativposition jeweils mittels der Regeleinrichtung der Verteilmaschine angesteuert wird. Somit könnten bspw. auch durch eine Bedienperson durchgeführte Lenk- und Antriebsbefehlt übersteuert werden.

Hierbei könnte vorgesehen sein, dass darüber hinaus beispielsweise eine weitere Steuerungseinheit und eine Antriebseinheit der Verteilmaschine angesteuert werden. Somit könnten auch die Fahrbewegungen der Verteilmaschine in Abhängigkeit der Relativposition und der Randstruktur sowie bspw. auch der Fahrspuren entsprechend gesteuert bzw. geregelt werden. Dadurch kann insbesondere erreicht werden, dass bei einer Verteilmaschine sowohl deren Verteilvorrichtung als auch deren Fahrbewegungen weitgehend autonom und ohne Einwirkung einer Bedienperson durchgeführt werden.

Die erfasste Randstruktur könnte bspw. ein Feldrand bzw. ein Feldende sein oder auch ein Rand des Pflanzenbestands, d.h. so könnte der Übergang zu einer andern Pflanzensorte erkannt werden. Beispielsweise kann eine Ackerfläche eine sich aus mehreren Seiten zusammengesetzte Randstruktur aufweisen, welche Randstruktur zudem mehrere Ecken mit verschiedenen Winkeln zueinander beinhalten kann. Ebenso wären auch Randstrukturen denkbar, welche Kurven oder welche Ecken und Kurven aufweisen. Auch könnten als Randstruktur Fahrgassen ermittelt werden. Auch Zäune wären als Randstruktur erfassbar bzw. könnten ausgewertet werden. Hierdurch können zudem Überlappungen und Doppelbehandlungen noch weiter vermieden werden. Zudem könnten auch bereits behandelte bzw. bereits bearbeitete Flächen des Pflanzenbestands bzw. der jeweiligen Ackerfläche als Randstruktur erfasst werden. Auch Straßen oder Wege können als Randstruktur erkannt bzw. erfasst werden. Ebenso könnten die Randstrukturen jeweils in der Regeleinrichtung hinterlegt sein, bzw. könnte die Regeleinrichtung entsprechende Daten aus einer Datenbank abrufen.

Zusätzlich oder wahlweise wäre es auch denkbar, dass mittels zusätzlicher Messmittel verschiedenste Parameter wie bspw. die aktuellen Fahrbewegungen erfasst werden. Bei den Fahrbewegungen kann bspw. erfasst werden, ob die Verteilmaschine oder dessen Zugfahrzeug sich vorwärts- oder rückwärts bewegt oder mit welcher Geschwindigkeit die Verteilmaschine oder dessen Zugfahrzeug bewegt wird. Auch könnte erfasst werden, ob die Verteilmaschine oder dessen Zugfahrzeug beschleunigt oder verzögert wird.

Zur Erfassung und/oder Auswertung der Randstruktur bzw. als Konturermittlungseinrichtung kann zusätzlich zu dem Gyroskop ein GPS-System an der Verteilmaschine vorhanden sein bzw. mit der Regeleinheit in Verbindung stehen. Auch wäre es denkbar, einen oder mehrere Laserscanner zu verwenden. Wahlweise könnten auch eine oder mehrere Kameras bzw. ein Kamerasystem verwendet werden. Zudem könnten auch Radarsensoren verwendet werden. Auch eine Kombination aus mehreren der vorgenannten Systeme wäre denkbar. So könnte bspw. durch die Kombination aus dem Gyroskop und einem GPS-System und/oder mit einem weiteren Sensor oder einer Kamera die jeweilige Randstruktur noch exakter erfasst werden.

Es sei hierzu angemerkt, dass der Begriff GPS-System sowohl bei der Ermittlung der Randstruktur als auch der Ermittlung der Fahrspuren als Oberbegriff für jegliches Satelliten basierte System bzw. für jedes beliebige Positionsbestimmungssystem steht. Wenn also jeweils von GPS-System die Rede ist, so sind hierbei ebenso bspw. das russische GLONASS-System oder das europäische GALILEO-System oder das chinesische BEIDOU-System usw. miterfasst.

Kennzeichnend für die Erfindung ist es, dass die jeweilige Randstruktur auf Basis eines mit einem Gyroskop ermittelten Kurvenradius und einem in der Regeleinrichtung hinterlegten Steuerungsprogramms ermittelt bzw. berechnet wird. Zudem könnte die jeweilige Randstruktur mittels der Regeleinrichtung aus einer Datenbank abgerufen werden.

Um die jeweilige Position der Verteilvorrichtung bzw. auch dessen Ausrichtung in Bezug auf die Verteilmaschine bzw. den Rahmen noch exakter zu erfassen, könnte zudem die Ausrichtung der Verteilmaschine miterfasst werden, wobei hierfür bspw. zwischen einem Zugfahrzeug und der Verteilmaschine ein Winkelsensor angebracht sein kann. Auch könnten an den Fahrwerken bzw. an den Rädern oder deren Lagerstellen Lenkwinkelsensoren angebracht sein. Auch könnten an der Verteilmaschine Beschleunigungssensoren oder Drehratensensoren oder Gyroskope angebaut sein. Auch eine Kombination der vorgenannten Sensoren wäre denkbar bzw. vorstellbar.

Um eine exakte Ausrichtung der Gestängesegmente bzw. der Verteilvorrichtung zu erreichen, ist in der Regeleinrichtung ein Steuerungsprogramm hinterlegt, welches unter Berücksichtigung der erfassten Istwerte der Ausrichtung bzw. der Relativposition und der erfassten bzw. vorhandenen Randstruktur, eine Berechnung zur Ansteuerung des zumindest einen motorischen Stellglieds erstellt. Dabei können auch mittels des Steuerungsprogramms hierfür entsprechende Verfahrgeschwindigkeiten des Stellgliedes definiert werden. Die Verfahrgeschwindigkeiten könnten zudem unter Berücksichtigung und Verarbeitung von verschiedensten Parametern wie bspw. den aktuellen Fahrbewegungen der Verteilmaschine noch weiter präzisiert werden, d.h. je größer bspw. die Fahrgeschwindigkeit der Verteilmaschine ist, desto schneller könnte die Verfahrgeschwindigkeit des zumindest einen motorischen Stellglieds sein.

Die Verfahrgeschwindigkeiten könnten jedoch auch auf Basis von verschiedenen anderen Parametern definiert sein, so dass wiederum durch ein zu schnelles oder zu langsames Verschwenken Doppelbehandlungen und/oder Unterbehandlungen vermieden werden können. So kann die Verfahrgeschwindigkeit bspw. auf Basis der Fahrgeschwindigkeit der Verteilmaschine und/oder auf Basis der Ausbringmenge und/oder auf Basis der Wegstrecke und/oder auf Basis der jeweils erfassten Relativpositionen erfolgen. Auch diese Parameter können bspw. wieder mittels verschiedenster Messmittel erfasst und mittels des in der Regeleinrichtung hinterlegten Steuerungsprogramms verarbeitet werden.

Auch wäre es denkbar, dass eine Regelung des zumindest einen motorischen Stellglieds durch eine Vorwärtsfahrt deaktiviert und durch eine Rückwärtsfahrt aktiviert wird. Zudem können dem zumindest einen motorischen Stellglied Dämpfungsmittel zur Unterbindung von sog. Gier- und Nickbewegungen in Fahrtrichtung zugeordnet sein, wobei diese hiervon unberührt sein können und sowohl bei Vorwärtsfahrt als auch bei Rückwärtsfahrt aktiviert bleiben können.

Eine Ansteuerung des zumindest einen Stellglieds kann derartig erfolgen, dass die Verteilvorrichtung und/oder deren Gestängesegmente eine zumindest weitgehend parallele Ausrichtung zur vorhandenen Randstruktur aufweisen oder das sich die projizierten senkrechten Ebenen der Verteilvorrichtung oder deren Gestängesegmente und der Randstruktur schneiden. Auch können sowohl die parallele Ausrichtung als auch die rechtwinkelige Ausrichtung zur Randstruktur in einem definierbaren Offset erfolgen, so dass eine Regelung entsprechend beschleunigt werden kann, jedoch diese dennoch ausreichend genau ist, um ein gewünschtes Arbeitsergebnis zu erzielen.

Wahlweise könnte eine Ansteuerung der Stellglieder auch derartig erfolgen, dass die Verteilmaschine jeweils den Fahrspuren folgt, während hingegen die Verteilvorrichtung oder deren Gestängesegmente jeweils auf Basis der vorhandenen Randstruktur entsprechend verschwenkt werden, so dass die Verteilvorrichtung oder deren Gestängesegmente der Randstruktur parallel und/oder rechtwinkelig folgen.

Gemäß einem Ausführungsbeispiel kann die gesamte Verteilvorrichtung derartig verschwenkt werden, dass diese eine zumindest weitgehend parallele Ausrichtung zur Randstruktur aufweist. Gemäß einem weiteren Ausführungsbeispiel kann die Verteilvorrichtung bzw. deren Gestängesegmente derartig verschwenkt werden, dass ein Gestängesegment eine weitgehend parallele Ausrichtung zu einer Randstruktur aufweist, sowie dass ein Gestängesegment eine weitegehend parallele und rechtwinkelige Ausrichtung zu einer Randstruktur aufweist.

Um beispielsweise eine zumindest weitgehend parallele und/oder rechtwinkelige Ausrichtung der Verteilvorrichtung bzw. der jeweiligen Gestängesegmente zu erreichen, können auf Basis des Steuerungsprogramms das jeweilige motorische Stellglied entsprechend angesteuert und die Verteilvorrichtung und/oder die Gestängesegmente entsprechend verschwenkt werden. Auch kann die Verteilmaschine mittels der Zugdeichsel bzw. mittels der Räder entsprechend gelenkt werden, um mittels der Verteilvorrichtung bzw. mittels der Gestängesegmente eine zumindest weitgehend parallele und/oder rechtwinkelige Ausrichtung zur vorhandenen Randstruktur zu erreichen. Auch könnten sowohl die Verteilmaschine entsprechend gelenkt als auch die Verteilvorrichtung und/oder die Gestängesegmente entsprechend verschwenkt werden.

In einer Weiterbildung wäre es zudem denkbar, dass in Abhängigkeit der erfassten Ausrichtung der Verteilvorrichtung bzw. der Gestängesegmente jeweils eine Ansteuerung der Teilbreiten der Verteilvorrichtung erfolgt, so dass eine Doppelbehandlung des Pflanzenbestandes noch weiter verhindert werden kann. Auch kann vorgesehen sein, dass in Abhängigkeit der erfassten Ausrichtung der Verteilvorrichtung bzw. der Gestängesegmente in Bezug auf die erfasste bzw. vorhandene Randstruktur, die Ausbringmengen an den Teilbreiten der Verteilvorrichtung erhöht oder verringert werden bzw. dass auch die Ausbringmengen an einzelnen Spritzdüsen entsprechend erhöht oder verringert werden, so dass wiederum eine Überbehandlung verhindert werden kann. Ebenso wäre es denkbar, dass auf Basis der vorhandenen Randstruktur an der Verteilvorrichtung verschiedene Spritzmuster ausgebracht werden, welche Spritzmuster bspw. durch eine Ansteuerung von verschiedenen Spritzdüsen oder durch verschiedene Ausbringmengen erzeugt werden können. Als Teilbreiten können bspw. auch einzelne Gestängesegmente dienen, so dass bspw. in Abhängigkeit der Randstruktur die Spritzdüsen von einzelnen Gestängesegmenten abgeschaltet werden.

In einer weiteren Ausführungsvariante könnte zudem vorgesehen sein, dass zusätzlich zur Lenkung und/oder der Verschwenkung der Verteilvorrichtung oder von deren Gestängesegmenten um die aufrechten Achsen die Verteilvorrichtung zusätzlich quer zur Fahrrichtung mit verschwenkt bzw. verschoben werden kann, wobei hierfür die Verteilvorrichtung bspw. mittels eines zusätzlichen Parallelogramms am Rahmen oder an einem dem Rahmen zugeordneten Parallelogramm gelagert sein kann oder bspw. mittels eines quer zur Fahrtrichtung verlaufenden Linearschlitten oder dergl. Zur Verschwenkung quer zur Fahrtrichtung kann der Verteilvorrichtung zumindest ein motorisches Stellglied zugeordnet sein, welches wiederum bspw. auf Basis einer vorhandenen Randstruktur entsprechend angesteuert wird und die Verteilvorrichtung entsprechend quer zur Fahrtrichtung verschwenkt wird. Auch kann dies ohne ein Verlassen der Fahrspuren erfolgen. Somit können Randstrukturen bzw. Kurven und Ecken noch exakter behandelt werden. Zur Erfassung der jeweiligen Position der Verteilvorrichtung quer zur Fahrtrichtung könnten zudem Sensoren vorhanden sein, um die jeweilige Relativposition zu ermitteln. Die sich durch die Verschwenkung quer zur Fahrtrichtung jeweils ergebenden unbehandelten Flächen könnten somit wiederum als Randstruktur erfasst bzw. definiert werden und bei einer Anschlussfahrt mit der Verteilmaschine an diese die Verteilvorrichtung und/oder deren Gestängesegmente entsprechend auf Basis dieser Randstruktur verschwenkt werden.

Das zumindest eine motorische Stellglied kann insbesondere zwischen dem Rahmen und der Verteilvorrichtung oder zwischen dem Rahmen und einem Gestängesegment oder zwischen zwei Gestängesegmenten angebaut sein und hydraulisch oder pneumatisch oder elektrisch betrieben werden. Insbesondere kann das zumindest eine Stellglied als Zylinder oder Linearantrieb oder Spindeltrieb oder dergl. ausgeführt sein. Auch können derartige hydraulische oder pneumatische Stellglieder verwendet werden, welche von einer elektrischen Steuerung oder einem elektrisch betätigten Ventil angesteuert werden.

Es sei angemerkt, dass die Begriffe "Regeleinrichtung" und "Steuerungsprogramm" als Oberbegriff für jegliche Art der Einflussnahme auf das zumindest eine Stellglied verstanden werden, wobei der Begriff "Regeleinrichtung" auch eine "Steuerung" umfasst und umgekehrt, da eine Regelung eine Steuerung mit einer Rückkopplung der gesteuerten Größe ist. Die Regeleinrichtung kann somit auch als Regler, insbesondere zur Regelung des zumindest einen Stellglieds, ausgeführt sein. Zudem kann die Regeleinrichtung oder das Steuerungsprogramm als elektrische oder hydraulische oder pneumatische oder als elektropneumatische oder elektrohydraulische Steuerung ausgeführt sein.

Die jeweils vorhandenen aufrechten Achsen können sowohl senkrecht als auch diagonal oder schräg im Raum verlaufend sein, wobei diese aber insbesondere jeweils derartig ausgerichtet sind, dass mittels dieser bzw. durch Rotation um diese jeweils horizontale Rotationsbewegungen der an diesen angebrachten Elemente bzw. Baugruppen erzeugt werden.

Wenn zuvor die erfindungsgemäße landwirtschaftliche Verteilmaschine beschrieben wurde, so sei an dieser Stelle ausdrücklich betont, dass alle Aspekte und Ausführungsvarianten, die im Zusammenhang mit der Verteilmaschine erläutert wurden, gleichermaßen Teilaspekte des nachfolgenden erfindungsgemäßen Verfahrens betreffen oder sein können. Wenn daher an einer Stelle bei der Beschreibung oder auch bei den Anspruchsdefinitionen von der erfindungsgemäßen landwirtschaftlichen Verteilmaschine die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte der landwirtschaftlichen Verteilmaschine sein können.

Zur Lösung der Aufgaben schlägt die Erfindung zudem ein Verfahren zur Steuerung und oder Regelung einer Verteilmaschine vor. Die landwirtschaftliche Verteilmaschine kann hierbei als selbstfahrende oder als mittels Zugfahrzeug gezogene oder als eine an einem Zugfahrzeug angebaute Verteilmaschine ausgeführt sein. Auch kann die Verteilmaschine als ein autonomes Fahrzeug ausgeführt sein bzw. eine autonome Verteilmaschine mit Verteilvorrichtung sein. Die Verteilmaschine umfasst zumindest einen Rahmen zum Tragen der jeweiligen Komponenten, einen oder mehrere Vorratsbehälter zum Mitführen und Bereitstellen des jeweiligen Verteilguts sowie eine sich in einer Arbeitsposition quer zur Fahrtrichtung erstreckende Verteilvorrichtung, an welcher Verteilvorrichtung nach unten gerichtete Ausbringdüsen zum Ausbringen und Verteilen der jeweiligen Flüssigkeiten und/oder der körnigen oder granulierten Stoffe angebracht sind.

Die Verteilvorrichtung ist beweglich am Rahmen angeordnet, wobei die Verteilvorrichtung hierfür bspw. mittels eines Parallelogramms oder mittels eines Linearschlittens auch in dessen Höhe verstellbar zum Rahmen angebracht aber auch direkt am Rahmen angebaut sein kann. Zum besseren Verständnis wird im nachfolgenden die Anbringung der Verteilvorrichtung jeweils nur auf den Rahmen bezogen, wobei dadurch jedoch eine Verbindung bspw. mittels eines Parallelogramms oder dergl. Zwischenrahmens zwischen der Verteilvorrichtung und dem Rahmen nicht ausgeschlossen ist, sondern sich die Bezeichnung Rahmen gleichermaßen auch auf derartige Ausführungsformen bezieht.

Zudem kann die Verteilvorrichtung in mehrere Gestängesegmente unterteilt sein, bspw. in ein Mittelteil und zwei, über aufrechte Achsen schwenkbar an diesem angebaute Seitenteile, wobei auch wiederum die Seitenteile aus mehreren ebenfalls mittels aufrechter Achsen schwenkbar zueinander angeordneter Gestängesegmente zusammengesetzt sein können. Zudem kann auch die Verteilvorrichtung bzw. dessen Mittelteil um eine aufrechte Achse schwenkbar am Rahmen bzw. an einem dem Rahmen zugeordneten Parallelogramm oder Linearschlitten oder dergleichen angebracht sein. Das Verschwenken der jeweiligen Gestängesegmente bzw. der Verteilvorrichtung um die aufrechte Achsen erfolgt mittels zumindest eines von einer elektronischen Regeleinrichtung ansteuerbaren motorischen Stellglieds. Zudem sind den Gestängesegmenten und/oder den aufrechten Achsen und/oder dem zumindest einen motorischen Stellglied Sensoren derartig zugeordnet, dass diese einen Istwert bzgl. der vorhandenen Ausrichtung bzw. der aktuellen Relativposition erfassen und an eine Regeleinrichtung weiterleiten bzw. ausgeben können.

Um eine landwirtschaftliche Verteilmaschine mit einer Verteilvorrichtung mit großer Arbeitsbreite zu schaffen, mit der es vereinfacht wird, auch stumpfe- oder spitze- oder rechte Winkel aufweisende Ecken und kurvenreiche Grenzen bzw. Randstrukturen einer Ackerfläche zu bearbeiten bzw. zu behandeln ohne hierbei den Pflanzenbestand zu beschädigen und gleichzeitig Doppelbehandlungen weitgehend zu vermeiden, ist ein Verfahren vorgesehen, welches zumindest die nachfolgenden Verfahrensschritte in beliebiger Reihenfolge umfasst:
- Erfassung und Weiterleitung eines Istwertes bzgl. der Ausrichtung bzw. der aktuellen Relativposition der Verteilvorrichtung und/oder der Gestängesegmente mittels diesen und/oder den aufrechten Achsen und/oder dem zumindest einen Stellglied zugeordneter Sensoren,
- Erfassung und/oder Auswertung einer Randstruktur mittels der Verteilmaschine zugeordneter und/oder mit der Regeleinrichtung in Verbindung stehender Konturermittlungseinrichtungen,
- Ansteuerung des wenigstens einen Stellglieds in Abhängigkeit der erfassten Ausrichtung und der vorhandenen Randstruktur.

Die erfasste Randstruktur könnte bspw. ein Feldrand bzw. ein Feldende sein oder auch ein Rand des Pflanzenbestands, d.h. so könnte der Übergang zu einer anderen Pflanzensorte erkannt werden. Auch könnten als Randstruktur Fahrgassen ermittelt werden. Auch Zäune wären als Randstruktur erfassbar bzw. könnten ausgewertet werden. Hierdurch können zudem Überlappungen und Doppelbehandlungen noch weiter vermieden werden. Zudem könnten auch bereits behandelte bzw. bereits bearbeitete Flächen des Pflanzenbestands bzw. der jeweiligen Ackerfläche als Randstruktur erfasst werden. Auch Straßen oder Wege können als Randstruktur erkannt bzw. erfasst werden. Ebenso könnten die Randstrukturen jeweils in der Regeleinrichtung hinterlegt sein, bzw. könnte die Regeleinrichtung entsprechende Daten aus einer Datenbank abrufen.

Zur Erfassung und/oder Auswertung der Randstruktur bzw. als Konturermittlungseinrichtung kann bspw. ein GPS-System an der Verteilmaschine vorhanden sein bzw. mit der Regeleinheit in Verbindung stehen. Auch wäre es denkbar, einen oder mehrere Laserscanner zu verwenden. Auch eine oder mehrere Kameras bzw. ein Kamerasystem könnten verwendet werden. Zudem könnten auch Radarsensoren verwendet werden. Auch eine Kombination aus mehreren der vorgenannten Systeme wäre denkbar. So könnte bspw. durch die Kombination aus einem GPS-System mit einem Sensor oder einer Kamera die jeweilige Randstruktur noch exakter erfasst werden.

Die Erfindung sieht vor, dass die jeweilige Randstruktur auf Basis eines mit einem Gyroskop ermittelten Kurvenradius und einem in der Regeleinrichtung hinterlegten Steuerungsprogramm ermittelt bzw. berechnet wird. Zudem könnte die jeweilige Randstruktur mittels der Regeleinrichtung aus einer Datenbank abgerufen werden.

Um die jeweilige Position der Verteilvorrichtung bzw. auch dessen Ausrichtung in Bezug auf die Verteilmaschine bzw. den Rahmen noch exakter zu erfassen, wird zudem die Ausrichtung der Verteilmaschine miterfasst, wobei hierfür bspw. zwischen einem Zugfahrzeug und der Verteilmaschine ein Winkelsensor angebracht sein kann. Auch könnten an den Fahrwerken bzw. an den Rädern oder deren Lagerstellen Lenkwinkelsensoren angebracht sein. Auch könnten an der Verteilmaschine Beschleunigungssensoren oder Drehratensensoren oder Gyroskope angebaut sein. Auch eine Kombination der vorgenannten Sensoren wäre denkbar bzw. vorstellbar.

Um eine exakte Ausrichtung der Gestängesegmente bzw. der Verteilvorrichtung zu erreichen, ist in der Regeleinrichtung ein Steuerungsprogramm hinterlegt, welches unter Berücksichtigung der erfassten Istwerte der Ausrichtung bzw. der Relativposition und der erfassten bzw. vorhandenen Randstruktur, eine Berechnung zur Ansteuerung des zumindest einen motorischen Stellglieds erstellt, wobei mittels des Steuerungsprogramms hierfür auch entsprechende Verfahrgeschwindigkeiten des Stellgliedes definiert werden können. Die Verfahrgeschwindigkeiten könnten zudem unter Berücksichtigung und Verarbeitung von verschiedensten Parametern wie bspw. den aktuellen Fahrbewegungen der Verteilmaschine noch weiter präzisiert werden, d.h. je größer bspw. die Fahrgeschwindigkeit der Verteilmaschine ist, desto schneller könnte die Verfahrgeschwindigkeit des zumindest einen motorischen Stellglieds sein.

Die Verfahrgeschwindigkeiten könnten jedoch auch auf Basis von verschiedenen anderen Parametern definiert sein, so dass wiederum durch ein zu schnelles oder zu langsamen verschwenken Doppelbehandlungen und/oder Unterbehandlungen vermieden werden können. So kann die Verfahrgeschwindigkeit bspw. auf Basis der Fahrgeschwindigkeit der Verteilmaschine und/oder auf Basis der Ausbringmenge und/oder auf Basis der Wegstrecke und/oder auf Basis der jeweils erfassten Relativpositionen erfolgen. Auch diese Parameter können bspw. wieder mittels verschiedenster Messmittel erfasst und mittels des in der Regeleinrichtung hinterlegten Steuerungsprogramms verarbeitet werden.

Auch wäre es denkbar, dass eine Regelung des zumindest einen motorischen Stellglieds durch eine Vorwärtsfahrt deaktiviert und durch eine Rückwärtsfahrt aktiviert wird. Zudem können dem zumindest einen motorischen Stellglied Dämpfungsmittel zur Unterbindung von sog. Gier- und Nickbewegungen in Fahrtrichtung zugeordnet sein, wobei diese hiervon unberührt sein können und sowohl bei Vorwärtsfahrt als auch bei Rückwärtsfahrt aktiviert bleiben können.

Eine Ansteuerung des zumindest einen Stellglieds kann derartig erfolgen, dass die Verteilvorrichtung und/oder deren Gestängesegmente eine zumindest weitgehend parallele Ausrichtung zur vorhandenen Randstruktur aufweisen oder dass sich die projizierten senkrechten Ebenen der Verteilvorrichtung oder deren Gestängesegmente und der Randstruktur schneiden. Auch können sowohl die parallele Ausrichtung als auch die rechtwinkelige Ausrichtung zur Randstruktur in einem definierbaren Offset erfolgen, so dass eine Regelung entsprechend beschleunigt werden kann, jedoch diese dennoch ausreichend genau ist, um ein gewünschtes Arbeitsergebnis zu erzielen.

In einer Weiterbildung wäre es zudem denkbar, dass in Abhängigkeit der erfassten Ausrichtung der Verteilvorrichtung bzw. der Gestängesegmente jeweils eine Ansteuerung der Teilbreiten der Verteilvorrichtung erfolgt, so dass eine Doppelbehandlung des Pflanzenbestandes noch weiter verhindert werden kann. Auch kann vorgesehen sein, dass in Abhängigkeit der erfassten Ausrichtung der Verteilvorrichtung bzw. der Gestängesegmente in Bezug auf die erfasste bzw. vorhandene Randstruktur, die Ausbringmengen an den Teilbreiten der Verteilvorrichtung erhöht oder verringert werden bzw. dass auch die Ausbringmengen an einzelnen Spritzdüsen entsprechend erhöht oder verringert werden, so dass wiederum eine Überbehandlung verhindert werden kann. Ebenso wäre es denkbar, dass auf Basis der vorhandenen Randstruktur an der Verteilvorrichtung verschiedene Spritzmuster ausgebracht werden, welche Spritzmuster bspw. durch eine Ansteuerung von verschiedenen Spritzdüsen oder durch verschiedene Ausbringmengen erzeugt werden können. Als Teilbreiten können bspw. auch einzelne Gestängesegmente dienen, so dass bspw. in Abhängigkeit der Randstruktur die Spritzdüsen von einzelnen Gestängesegmenten abgeschaltet werden.

In einer weiteren Ausführungsvariante könnte zudem vorgesehen sein, dass zusätzlich zur Lenkung und/oder der Verschwenkung der Verteilvorrichtung oder von deren Gestängesegmenten um die aufrechten Achsen die Verteilvorrichtung zusätzlich quer zur Fahrrichtung mit verschwenkt bzw. verschoben werden kann, wobei hierfür die Verteilvorrichtung bspw. mittels eines zusätzlichen Parallelogramm am Rahmen oder an einem dem Rahmen zugeordneten Parallelogramm gelagert sein kann oder bspw. mittels eines quer zur Fahrtrichtung verlaufenden Linearschlitten oder dergl. Zur Verschwenkung quer zur Fahrtrichtung kann der Verteilvorrichtung zumindest ein motorisches Stellglied zugeordnet sein, welches wiederum bspw. auf Basis einer vorhandenen Randstruktur entsprechend angesteuert wird und die Verteilvorrichtung entsprechend quer zur Fahrtrichtung verschwenkt. Auch kann dies ohne ein Verlassen der Fahrspuren erfolgen. Somit können Randstrukturen bzw. Kurven und Ecken noch exakter behandelt werden. Zur Erfassung der jeweiligen Position der Verteilvorrichtung quer zur Fahrtrichtung könnten zudem Sensoren vorhanden sein, um die jeweilige Relativposition zu ermitteln. Die sich durch die Verschwenkung quer zur Fahrtrichtung jeweils ergebenden unbehandelten Flächen könnten somit wiederum als Randstruktur erfasst bzw. definiert werden und bei einer Anschlussfahrt mit der Verteilmaschine an diese die Verteilvorrichtung und/oder deren Gestängesegmente entsprechend auf Basis dieser Randstruktur verschwenkt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Fig. 1: eine Perspektivansicht einer als selbstfahrende Maschine ausgeführten landwirtschaftlichen Verteilmaschine mit einer sich in Arbeitsposition befindenden Verteilvorrichtung.
- Fig. 2: eine vergrößerte Perspektivansicht der landwirtschaftlichen Verteilmaschine bzw. deren Verteilvorrichtung gemäß der Fig. 1.
- Fig. 3: eine Draufsicht einer als selbstfahrende Maschine ausgeführten landwirtschaftlichen Verteilmaschine mit einer sich in Arbeitsposition befindenden Verteilvorrichtung und mittels Pfeilen angedeuteten Gier- und Nickbewegungen dieser.
- Fig. 4: eine schematische Draufsicht einer als gezogene Maschine ausgeführten landwirtschaftlichen Verteilmaschine mit einer Verteilvorrichtung, welche eine weitgehend parallele Ausrichtung zu einer Randstruktur aufweist.
- Fig. 5: eine schematische Draufsicht einer als gezogene Maschine ausgeführten landwirtschaftlichen Verteilmaschine mit einer Verteilvorrichtung mit zwei Gestängesegmenten, welche jeweils eine weitgehend parallele bzw. rechtwinkelige Ausrichtung zu einer Randstruktur aufweisen.
- Fig. 6: ein Blockschaltbild einer möglichen Wirkkette der Steuerung und/oder Regelung der landwirtschaftlichen Verteilmaschine.

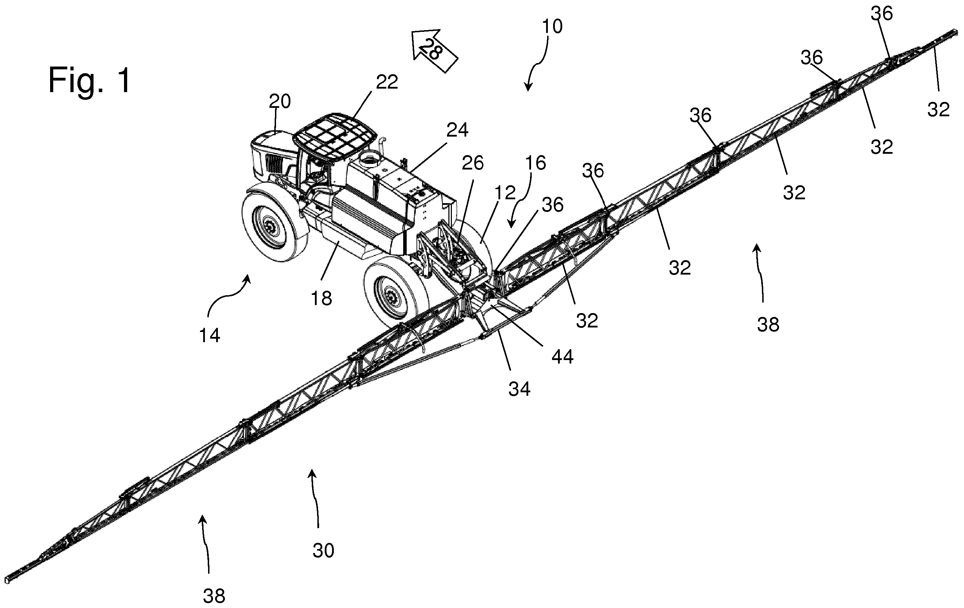

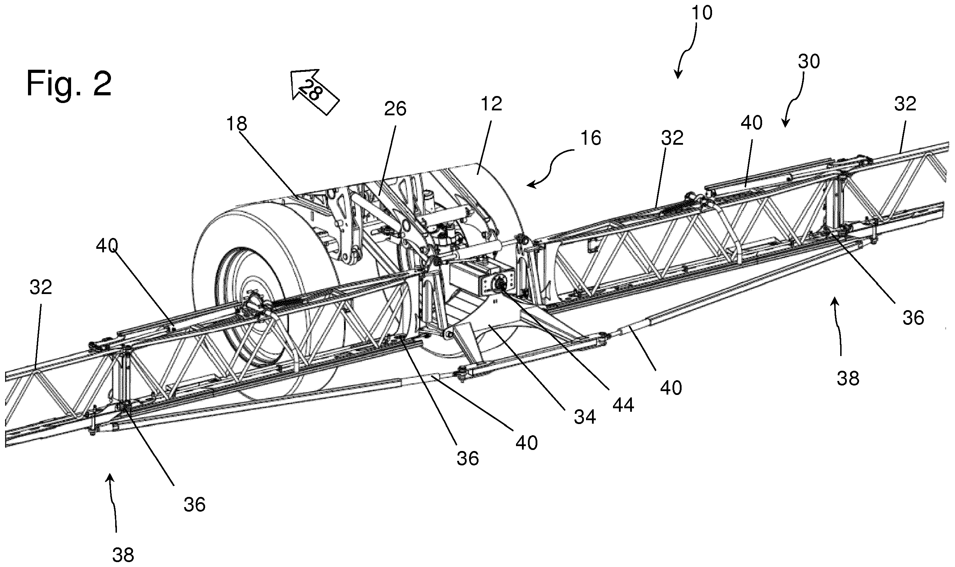

Für gleiche oder gleich wirkende Elemente der Erfindung werden in den Figuren 1 bis 6 jeweils identische Bezugszeichen verwendet. Ferner werden der besseren Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Verteilmaschine oder das erfindungsgemäße Verfahren ausgestaltet sein können und stellen keine abschließende Begrenzung dar.

Eine Ausführungsvariante einer erfindungsgemäßen landwirtschaftlichen Verteilmaschine 10 geht aus den Figuren 1 bis 3 hervor. Die hierbei gezeigte Verteilmaschine 10 ist als selbstfahrende Maschine ausgeführt, wobei die Erfindung ebenso bei gezogenen oder autonomen Maschinen verwendet bzw. eingesetzt werden kann. Die Verteilmaschine 10 umfasst vier die Verteilmaschine 10 tragende Räder 12, wobei jeweils zwei gegenüberliegende Räder 12 ein Fahrwerk bzw. eine Achse bilden und wobei zumindest die Räder 12 der vorderen Achse 14 oder nur die Räder 12 der hinteren Achse 16 oder die Räder 12 beider Achsen 14, 16 jeweils bspw. um aufrechte Achsen schwenkbar bzw. lenkbar zum Rahmen 18 angeordnet sind. Die Achsen 14, 16 sind zudem an einem die Komponenten der Verteilmaschine 10 tragenden Rahmen 18 montiert. Zudem umfasst die Verteilmaschine 10 einen die Verteilmaschine 10 antreibenden Motor 20 eine Kabine 22 und einen Vorratsbehälter 24 zum Mitführen und Bereitstellen der jeweiligen Flüssigkeit und/oder der körnigen oder granulierten Stoffe oder deren Gemische.

Am hinteren Ende ist dem Rahmen 18 ein mittels Aktoren in dessen Höhe in Bezug auf den Rahmen 18 verstellbares Parallelogramm 26 zugeordnet, an welches eine sich quer zur Fahrtrichtung 28 erstreckende Verteilvorrichtung 30 anschließt. Es sei hierbei nochmals darauf hingewiesen, dass die Ausführungsform mittels eines Parallelogramms 26 nur eine Anbaumöglichkeit der Verteilvorrichtung 30 darstellt. Ebenso wäre es auch denkbar, diese bzw. die Verteilvorrichtung 30 direkt am Rahmen 18 anzubringen. Der Einfachheit halber wird nachfolgend jedoch die Anbringung der Verteilvorrichtung 30 jeweils auf den Rahmen bezogen, wobei dadurch jedoch eine Verbindung mittels eines Parallelogramms 26 oder einem anderen Zwischensegment oder Zwischenrahmen nicht ausgeschlossen ist, sondern sich die Bezeichnung Rahmen in Verbindung mit der Anbringung der Verteilvorrichtung 30 gleichermaßen auch auf derartige Ausführungsformen bezieht.

Die Verteilvorrichtung ist in mehrere Gestängesegmente 32 unterteilt und besteht aus einem Mittelteil 34 und jeweils links und rechts an diesem über aufrechte Achsen 36 schwenkbar angebauten Seitenteilen 38, wobei ebenso die Seitenteile 38 wiederum aus mehreren ebenfalls mittels aufrechter Achsen 36 schwenkbar zueinander angeordneter Gestängesegmente 32 zusammengesetzt sind. Die gezeigte Verteilmaschine 10 setzt sich bspw. aus insgesamt elf Gestängesegmenten 32 zusammen, welche jeweils um aufrechte Achsen 36 zueinander verschwenkbar sind.

Zudem könnte ebenso die Verteilvorrichtung 30 bzw. dessen Mittelteil 34 um eine aufrechte Achse schwenkbar am Rahmen 18 bzw. am Parallellogramm 26 angebracht sein, wodurch auch die gesamte Verteilvorrichtung 30 entsprechend verschwenkt werden könnte.

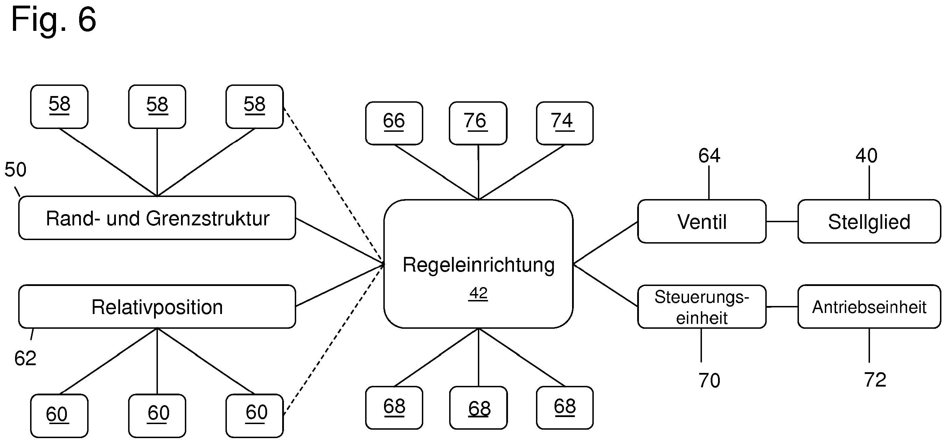

Zum Verschwenken der jeweiligen Gestängesegmente 32 zueinander bzw. der Verteilvorrichtung 30 um die jeweiligen aufrechten Achsen 36, sind an diesen motorische Stellglieder 40 vorgesehen, welche insbesondere von einer elektronischen Regeleinrichtung 42 angesteuert bzw. betätigt werden (vergl. Fig. 6). Bei den Stellgliedern 40 gemäß den Figuren 1 bis 3 handelt es sich jeweils um hydraulisch betriebene Zylinder bzw. Linearantriebe, welche von einem elektrisch betätigten Ventil angesteuert werden. Es wären jedoch auch pneumatische und/oder elektrisch betriebene Stellglieder 40 verwendbar.

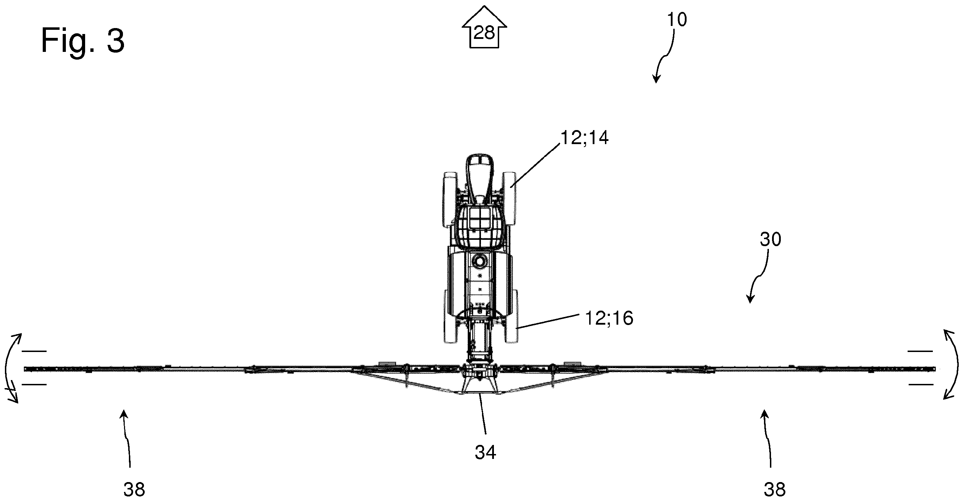

Mittels der vorhandenen motorischen Stellglieder 40 kann somit auch den auf die Verteilvorrichtung 30 wirkenden Gier- und Nickbewegungen (vergl. Fig. 3 Pfeile), welche bspw. sensorisch erfasst werden können, durch eine entsprechende Ansteuerung der Stellglieder 40 entgegen gewirkt werden. Auch können die motorischen Stellglieder 40 mit Dämpfungsmittel oder dergl. versehen sein, um somit entsprechenden Gier- und Nickbewegungen entgegenzuwirken.

Des Weiteren kann die Verteilvorrichtung 30 um eine in Fahrtrichtung 28 verlaufende Drehachse 44 mittels zumindest eines Antriebselements 46 entsprechend einer Bodenkontur wiederum verschwenkt werden, um somit eine möglichst exakte Anpassung an die jeweilige Bodenkontur bzw. den jeweiligen Horizont zu erreichen, bzw. um möglichst gleiche Abstände zwischen der Verteilvorrichtung 30 und der Bodenkontur bzw. zu einem Pflanzenbestand zu erreichen.

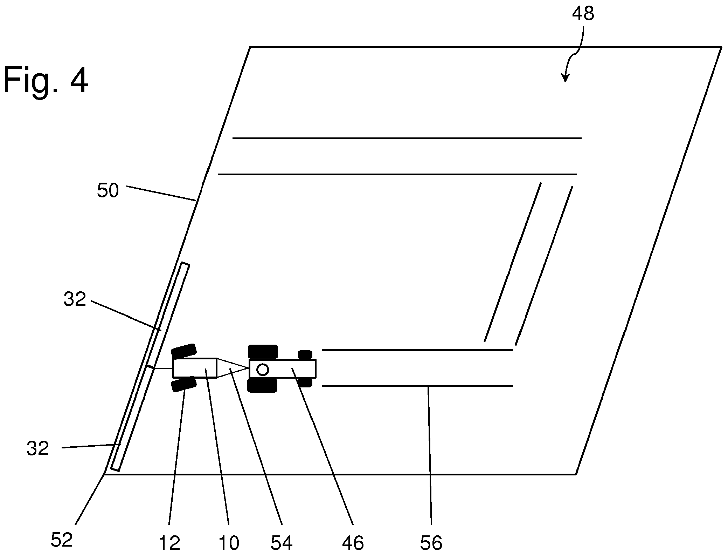

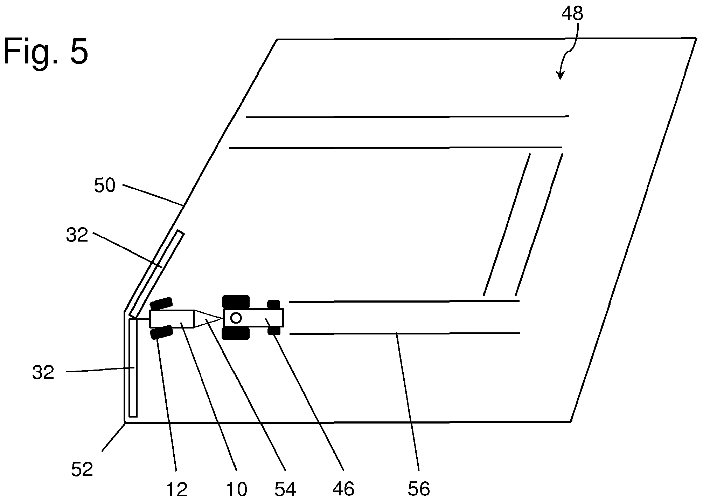

Weitere Details der Erfindung gehen aus den schematischen Draufsichten der Figuren 4 und 5 hervor. Die hierbei gezeigte landwirtschaftliche Verteilmaschine 10 ist als mittels eines Zugfahrzeugs 46 gezogene landwirtschaftliche Verteilmaschine 10 ausgeführt, wobei auch hierbei wiederum angemerkt sei, dass die Erfindung ebenso bei selbstfahrenden oder autonomen Maschinen verwendet bzw. eingesetzt werden kann. Die Verteilmaschine 10 wird mittels eines Zugfahrzeuges 46 über eine Ackerfläche 48 bewegt. Die Ackerfläche 48 weist eine sich aus mehreren Seiten zusammengesetzte Randstruktur 50 auf, welche Randstruktur 50 zudem mehrere Ecken 52 mit verschiedenen Winkel zueinander beinhaltet. Die Verbindung zwischen der Verteilmaschine 10 und dem Zugfahrzeug erfolgt mittels einer Zugvorrichtung bzw. einer Zugdeichsel 54. Ebenso wären auch Randstrukturen denkbar, welche Kurven aufweisen bzw. Randstrukturen welche Ecken 52 und Kurven aufweisen.

Die Verteilmaschine 10 weist zudem wiederum eine Achse bzw. ein Fahrwerk mit zwei jeweils lenkbaren Rädern 12 auf, welche Räder 12 mittels eines motorischen Stellgliedes 40 verschwenkt bzw. gelenkt werden können. Es sei hierzu angemerkt, dass neben einer Lenkung der Räder 12, es ebenso denkbar wäre, die Verteilmaschine 10 mittels einer verschwenkbaren Zugvorrichtung 54 zu lenken oder auch die Verteilmaschine 10 sowohl mittels der Räder 12 als auch mittels der Zugvorrichtung 54 zu lenken. Die landwirtschaftliche Verteilmaschine 10 wird mittels des Zugfahrzeuges 46 entlang von Fahrspuren 56 geführt. Bei den Fahrspuren 56 kann es sich bspw. um sog. Fahrgassen handeln. Es wären jedoch auch andere Fahrspuren 56 denkbar. Insbesondere können die jeweiligen Fahrspuren 56 mittels Spurermittlungseinrichtungen 74 erfasst und/oder ausgewertet werden, bspw. könnten diese auch in der Regeleinrichtung 42 hinterlegt sein oder es könnten entsprechende Daten mittels der Regeleinrichtung 42 von einer Datenbank abgerufen werden.

Um in Abhängigkeit der jeweiligen Fahrspuren 56 und der jeweils vorhandenen Randstrukturen 50 eine möglichst ganzflächige Behandlung der Ackerfläche 48 zu erreichen, ist vorgesehen, dass die jeweilige Randstruktur 50 mittels mittels eines Gyroskops und7oder eines Beschleunigungssensors erfasst wird und an die Regeleinrichtung 42 entsprechend übermittelt wird bzw. an der Verteilmaschine 10 angebaut sind oder mit der Regeleinrichtung 42 in Verbindung stehen. Gegebenenfalls können unterstützend weitere verschiedenster Konturermittlungseinrichtungen 58 wie bspw. einem Laserscanner und/oder einer Kamera und/oder mittels eines GPS-Systems und/oder mittels Radarsensoren oder dergl. vorgesehen sein. Auch können die jeweiligen Randstrukturen 50 aus einer Datenbank mittels der Regeleinrichtung 42 entsprechend abgerufen oder ausgelesen werden.

Zudem sind an der Verteilvorrichtung 30 und/oder an den jeweiligen Gestängesegmenten 32 und/oder an den jeweils lenkbaren Räder 12 und/oder der lenkbaren Zugdeichsel 54 und/oder den Stellglieder 40 bzw. an den aufrechten Achsen 36 Sensoren 60 derartig angebracht, dass mittels dieser die aktuelle Ausrichtung bzw. Relativposition 62 ermittelt wird. Mittels der Regeleinrichtung 42 kann somit durch ein entsprechendes Steuerungsprogramm jeweils eine Ausrichtung der Verteilvorrichtung 30 oder eine Ausrichtung von deren Gestängesegmenten 32 in Bezug auf die Randstruktur 50 berechnet werden und anschließend das jeweilige motorische Stellglied 40 bzw. ein diesem zugeordnetes Ventil 64 entsprechend angesteuert werden und somit die Verteilmaschine 10 bzw. dessen Verteilvorrichtung 30 oder dessen Gestängesegmente 32 in eine gewünschte Position bewegt werden.

Um eine zumindest weitgehend parallele und/oder rechtwinkelige Ausrichtung der Verteilvorrichtung 30 bzw. der jeweiligen Gestängesegmente 32 zu erreichen, werden bzw. wird auf Basis des Steuerungsprogramms das jeweilige motorische Stellglied 40 entsprechend angesteuert und die Verteilvorrichtung 30 und/oder die Gestängesegmente 32 entsprechend verschwenkt. Auch kann die Verteilmaschine 10 mittels der Zugdeichsel 54 bzw. mittels der Räder 12 entsprechend gelenkt werden, um mittels der Verteilvorrichtung 30 bzw. mittels der Gestängesegmente 32 eine zumindest weitgehend parallele und/oder rechtwinkelige Ausrichtung zur vorhandenen Randstruktur 50 zu erreichen. Auch könnten sowohl die Verteilmaschine 10 entsprechend gelenkt als auch die Verteilvorrichtung 30 und/oder die Gestängesegmente 32 entsprechend verschwenkt werden.

So wurde gemäß der Fig. 4 die gesamte Verteilvorrichtung 30 derartig verschwenkt, dass diese eine zumindest weitgehend parallele Ausrichtung zur Randstruktur 50 aufweist, wohingegen gemäß der Fig. 5 die Verteilvorrichtung 30 bzw. deren Gestängesegmente 32 derartig verschwenkt wurden, dass ein Gestängesegment 32 eine weitgehend parallele Ausrichtung zu einer Randstruktur 50 aufweist, sowie dass ein Gestängesegment 32 eine weitegehend parallele und rechtwinkelige Ausrichtung zu einer Randstruktur 50 aufweist.

Die Verteilmaschine 10 kann jeweils entlang einer definierbaren bzw. einer definierten Fahrspur 56 geführt werden, was bedeutet, dass deren Räder 12 und/oder deren Zugvorrichtung 54 derartig gelenkt werden, dass diese der Fahrspur 56 folgen. So können zur Erfassung und/oder Auswertung dieser Fahrspur 56 der Verteilmaschine 10 zugeordnet und/oder mit einer Regeleinrichtung 42 in Verbindung stehend Spurermittlungseinrichtungen 74 vorgesehen sein. So könnte eine Ansteuerung der Stellglieder 40 auch derartig erfolgen, dass die Verteilmaschine 10 jeweils den Fahrspuren 56 folgt, die Verteilvorrichtung 30 oder deren Gestängesegmente 32 hingegen jeweils auf Basis der vorhandenen Randstruktur 10 entsprechend verschwenkt werden, so dass die Verteilvorrichtung 30 oder deren Gestängesegmente 32 der Randstruktur 50 parallel und/oder rechtwinkelig folgen.

Weitere Details der Ansteuerung des motorischen Stellgliedes 40 oder der motorischen Stellglieder 40 gehen aus dem Blockschaltbild der Fig. 6 hervor. Zur Erfassung einer Randstruktur 50 bzw. einer Grenzstruktur sind an der Verteilmaschine 10 bzw. mit der Regeleinrichtung 42 in Verbindung stehenden Konturermittlungseinrichtungen 58 vorgesehen. Die Konturermittlungseinrichtungen 58 sollen die jeweilige Randstruktur 50 entsprechend erfassen, auswerten und an die Regeleinrichtung 42 übermitteln, die Konturermittlungseinrichtungen 58 könnten jedoch auch nur Signale an die Regeleinrichtung 42 übermitteln. Anschließend sollte mittels eines in der Regeleinrichtung 42 hinterlegten Steuerungsprogramms eine Randstruktur 50 entsprechend dem Gegenstand der beanspruchten Erfindung generiert bzw. ausgewertet werden. Auch könnte die Konturermittlungseinrichtung 58 mit einer Datenbank in Verbindung stehen.

Zudem sind zur Erfassung einer Relativposition 62 der Verteilvorrichtung 30 und/oder der Gestängesegmente 32 bzw. der Ausrichtung der Räder 12 und/oder der Zugvorrichtung 54 Sensoren 60 vorgesehen bspw. an der Verteilmaschine 10 und/oder an den aufrechten Achsen 36 und/oder den Stellgliedern 40. Bei den Sensoren 60 kann es sich insbesondere um jegliche Art von Positionssensoren handeln, bspw. um Winkelpotentiometer oder Winkelsensoren oder dergl. Die Sensoren 60 können die jeweilige Relativposition 62 entsprechend erfassen und an die Regeleinrichtung 42 übermitteln. Die Sensoren 60 könnten jedoch auch nur Signale an die Regeleinrichtung 42 übermitteln. Die entsprechenden Signale können anschließend mittels eines in der Regeleinrichtung 42 hinterlegten Steuerungsprogramms in entsprechende Werte der Relativpositionen 62 umgewandelt werden.

Neben der Randstruktur 50 und der Relativposition 62 können in die Regeleinrichtung 42 noch weitere Angaben eingegeben, bzw. von dieser verarbeitet werden. So wäre es denkbar, dass mittels zusätzlicher Messmittel 66 verschiedenste Parameter 76 wie bspw. die aktuellen Fahrbewegungen 68 erfasst werden. Bei den Fahrbewegungen 68 kann bspw. erfasst werden, ob die Verteilmaschine 10 oder dessen Zugfahrzeug 46 sich vorwärts- oder rückwärts bewegt oder mit welcher Geschwindigkeit die Verteilmaschine 10 oder dessen Zugfahrzeug 46 bewegt wird. Auch könnte erfasst werden, ob die Verteilmaschine 10 oder dessen Zugfahrzeug 46 beschleunigt oder verzögert wird.

Auch könnten bspw. die Fahrspuren 56 mittels zusätzlicher Messmittel 66 bzw. mittels Spurermittlungseinrichtungen 74 erfasst und/oder ausgewertet werden, die Fahrspuren 56 könnten jedoch auch mittels eines GPS-Systems an die Regeleinrichtung 42 übermittelt werden. Ebenso könnten die Fahrspuren 56 in einer mit der Regeleinrichtung 42 in Verbindung stehender Datenbank hinterlegt sein.

Des Weiteren könnten weitere Messmittel 66 zur Ermittlung der Ausrichtung der Verteilmaschine 10 vorgesehen sein, bspw. Beschleunigungssensoren oder Drehratensensoren oder Gyroskope oder Positionssensoren oder dergl.

Auf Basis der jeweiligen Randstruktur 50 und der Relativposition 62 wird anschließend mittels der Regeleinrichtung 42 ein zum jeweiligen motorischen Stellglied 40 zugehöriges Ventil 64 angesteuert, welches anschließend das Stellglied 40 derartig ansteuert, dass die Verteilvorrichtung 30 bzw. die Gestängesegmente 32 bzw. die Verteilmaschine 10 eine jeweils gewünschte Position einnehmen.

Zudem könnte vorgesehen sein, dass darüber hinaus bspw. eine weitere Steuerungseinheit 70 und eine Antriebseinheit 72 der Verteilmaschine 10 angesteuert werden und somit auch die Fahrbewegungen der Verteilmaschine 10 wiederum in Abhängigkeit der Relativposition 62 und der Randstruktur 50 sowie bspw. auch der Fahrspuren 56 entsprechend gesteuert bzw. geregelt werden. Somit kann insbesondere erreicht werden, dass bei einer Verteilmaschine 10 sowohl deren Verteilvorrichtung 10 als auch deren Fahrbewegungen weitgehend autonom und ohne Einwirkung einer Bedienperson durchgeführt werden.

Um eine jeweils möglichst exakte Ausrichtung der Gestängesegmente 32 bzw. der Verteilvorrichtung 30 zu erreichen, ist in der Regeleinrichtung 42 ein Steuerungsprogramm hinterlegt, welches unter Berücksichtigung der erfassten Istwerte der Ausrichtung bzw. der Relativposition und der erfassten bzw. vorhandenen Randstruktur 50, eine Berechnung zur Ansteuerung des motorischen Stellglieds 40 erstellt, wobei mittels des Steuerungsprogramms hierfür auch entsprechende Verfahrgeschwindigkeiten des Stellgliedes 40 definiert werden können. Die Verfahrgeschwindigkeiten könnten zudem unter Berücksichtigung und Verarbeitung verschiedenster Parameter 76 wie bspw. von aktuellen Fahrbewegungen 68 der Verteilmaschine 10 noch weiter präzisiert werden, d.h. je größer die Fahrgeschwindigkeit der Verteilmaschine 10, desto schneller die Verfahrgeschwindigkeit des zumindest einen motorischen Stellglieds 40.

Die Verfahrgeschwindigkeiten könnten jedoch auch auf Basis von verschiedenen anderen Parametern 76 erfolgen, so dass wiederum durch ein zu schnelles oder zu langsames Verschwenken Doppelbehandlungen und/oder Unterbehandlungen vermieden werden können. So kann die Verfahrgeschwindigkeit bspw. auf Basis der Fahrgeschwindigkeit der Verteilmaschine 10 und/oder auf Basis der Ausbringmenge und/oder auf Basis der Wegstrecke und/oder auf Basis der jeweils erfassten Relativpositionen erfolgen. Auch diese Parameter 76 können bspw. wieder mittels verschiedenster Messmittel 66 erfasst und mittels des in der Regeleinrichtung 42 hinterlegten Steuerungsprogramms verarbeitet werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: landwirtschaftliche Verteilmaschine
- 12: Räder
- 14: vordere Achse
- 16: hinter Achse
- 18: Rahmen
- 20: Motor
- 22: Kabine
- 24: Vorratsbehälter
- 26: Parallellogrammführung
- 28: Fahrtrichtung
- 30: Verteilvorrichtung
- 32: Gestängesegment
- 34: Mittelteil
- 36: aufrechte Achse
- 38: Seitenteil
- 40: Stellglied
- 42: Regeleinrichtung
- 44: Drehachse
- 46: Zugfahrzeug
- 48: Ackerfläche
- 50: Randstruktur
- 52: Ecke
- 54: Zugdeichsel; Zugvorrichtung
- 56: Fahrspur
- 58: Konturermittlungseinrichtung
- 60: Sensoren
- 62: Relativposition
- 64: Ventil
- 66: Messmittel
- 68: Fahrbewegungen
- 70: Steuerungseinheit
- 72: Antriebseinheit
- 74: Spurermittlungseinrichtung
- 76: Parameter

## Patentansprüche

1. Landwirtschaftliche Verteilmaschine (10) mit zumindest einem Rahmen (18), einem Vorratsbehälter (24) oder mehreren Vorratsbehältern (24) sowie einer Verteilvorrichtung (30) zum Ausbringen von Flüssigkeiten und/oder von körnigen und/oder granulierten Stoffen, wobei die Verteilvorrichtung (30) beweglich am Rahmen (18) angeordnet und in mehrere Gestängesegmente (32) unterteilt ist, welche über aufrechte Achsen (36) verschwenkbar zueinander und/oder zum Rahmen (18) angeordnet sind,
- wobei zum Verschwenken der Gestängesegmente (32) zumindest ein von einer elektronischen Regeleinrichtung (42) ansteuerbares motorisches Stellglied (40) vorgesehen ist,
- und wobei den Gestängesegmenten (32) und/oder der Verteilvorrichtung (30) und/oder den aufrechten Achsen (36) und/oder dem zumindest einen Stellglied (40) Sensoren (60) zur Erfassung und Weiterleitung eines Istwertes bzgl. der Ausrichtung der Gestängesegmente (32) und/oder der Verteilvorrichtung (30) und/oder den aufrechten Achsen (36) und/oder des Stellgliedes (40) zugeordnet sind,
wobei zur Erfassung und/oder Auswertung einer Randstruktur (50) einer von der landwirtschaftlichen Verteilmaschine (10) zu bearbeitenden und/oder zu überfahrenden Fläche Konturermittlungseinrichtungen (58) vorgesehen sind, die der landwirtschaftlichen Verteilmaschine (10) zugeordnet und/oder mit der Regeleinrichtung (42) in Verbindung stehen,
**dadurch gekennzeichnet, dass** die jeweilige Randstruktur (50) auf Basis eines mit einem Gyroskop ermittelten Kurvenradius und eines in der Regeleinrichtung (42) hinterlegten Steuerungsprogramms berechenbar ist,
und dass eine Ansteuerung des zumindest einen Stellgliedes (40) in Abhängigkeit von einer erfassten Ausrichtung der Verteilvorrichtung (30) und/oder der Gestängesegmente (32) und der erfassten bzw. vorhandenen Randstruktur (50) vorgesehen ist bzw. erfolgt.

2. Landwirtschaftliche Verteilmaschine nach Anspruch 1, **dadurch gekennzeichnet, dass** mittels des zumindest einen Stellgliedes (40) die Gestängesegmente (32) und/oder die Verteilvorrichtung (30) derartig verschwenkbar sind bzw. verschwenkt werden, dass diese eine zumindest weitgehend oder annähernd parallele und/oder rechtwinkelige Ausrichtung zur Randstruktur (50) aufweisen.

3. Landwirtschaftliche Verteilmaschine nach Anspruch 1 oder 2, **dadurch gekennzeichnet, dass** in Abhängigkeit von der erfassten Ausrichtung und der vorhandenen Randstruktur (50) eine Ansteuerung einer Lenkung oder Lenkeinrichtung der Verteilmaschine (10) erfolgt.

4. Landwirtschaftliche Verteilmaschine nach Anspruch 1 oder 2, **dadurch gekennzeichnet, dass** zur Erfassung der Ausrichtung der Verteilmaschine (10) und/oder des Rahmens (18) ein Winkelsensor zwischen einem Zugfahrzeug (46) und der Verteilmaschine (10) angeordnet ist und/oder die Verteilmaschine (10) Lenkwinkelsensoren aufweist.

5. Landwirtschaftliche Verteilmaschine nach einem der vorhergehenden Ansprüche, **dadurch gekennzeichnet, dass** mittels eines in der Regeleinrichtung (42) hinterlegten Steuerungsprogramms unter Berücksichtigung der Istwerte der Ausrichtung und der vorhandenen Randstruktur (50) eine Berechnung zur Ansteuerung des zumindest einen Stellglieds (40) erfolgt.

6. Landwirtschaftliche Verteilmaschine nach einem der vorhergehenden Ansprüche, **dadurch gekennzeichnet, dass** eine Ansteuerung des zumindest einen Stellglieds (40) durch eine Rückwärtsfahrt aktiviert und durch eine Vorwärtsfahrt deaktiviert wird und/oder dass eine Ansteuerung des zumindest einen Stellglieds (40) auf Basis von Fahrbewegungen der Verteilmaschine (10) erfolgt.

7. Landwirtschaftliche Verteilmaschine nach einem der vorhergehenden Ansprüche, **dadurch gekennzeichnet, dass** die parallele Ausrichtung derartig erfolgt, dass zumindest ein Gestängesegment (32) und die Randstruktur (50) sich überlappen oder einen definierten Abstand zueinander aufweisen.

8. Landwirtschaftliche Verteilmaschine nach einem der vorhergehenden Ansprüche, **dadurch gekennzeichnet, dass** die parallele und/oder rechtwinkelige Ausrichtung einen definierbaren Offset aufweisen.

9. Landwirtschaftliche Verteilmaschine nach einem der vorhergehenden Ansprüche, **dadurch gekennzeichnet, dass** als Konturermittlungseinrichtung (58) ein GPS-System und/oder ein Laserscanner und/oder eine Kamera und/oder ein Kamerasystem und/oder ein Radarsensor verwendbar sind.

10. Landwirtschaftliche Verteilmaschine nach einem der vorhergehenden Ansprüche, **dadurch gekennzeichnet, dass** in der Regeleinrichtung (42) Karten der jeweiligen Ackerfläche hinterlegt sind.

11. Landwirtschaftliche Verteilmaschine nach einem der vorhergehenden Ansprüche, **dadurch gekennzeichnet, dass** die Regeleinrichtung (42) die jeweiligen Randstrukturen (50) aus einer Datenbank ausliest.

12. Landwirtschaftliche Verteilmaschine nach einem der vorhergehenden Ansprüche, **dadurch gekennzeichnet, dass** in Abhängigkeit von der erfassten Ausrichtung und/oder der vorhandenen Randstruktur (50) die Ansteuerung der Teilbreiten der Verteilvorrichtung (30) erfolgt, und/oder das in Abhängigkeit von der erfassten Ausrichtung und/oder der vorhandenen Randstruktur (50) die Ausbringmengen der Teilbreiten der Verteilvorrichtung (30) geregelt werden, und/oder dass in Abhängigkeit von der erfassten Ausrichtung und der vorhandenen Randstruktur (50) verschiedene Spritzmuster erzeugbar sind.

13. Landwirtschaftliche Verteilmaschine (10) nach einem der vorhergehenden Ansprüche, **dadurch gekennzeichnet, dass** die Verteilvorrichtung (30) quer zur Fahrrichtung (28) verschwenkt werden kann, wobei ein Verschwenken auf Basis einer vorhandenen Randstruktur (50) erfolgt.

14. Verfahren zur Steuerung und/oder Regelung einer landwirtschaftlichen Verteilmaschine (10) mit zumindest einem Rahmen (18), einem Vorratsbehälter (24) oder mehreren Vorratsbehältern (24) sowie einer Verteilvorrichtung (30) zum Ausbringen von Flüssigkeiten und/oder körnigen oder granulierten Stoffen, wobei die Verteilvorrichtung (30) beweglich am Rahmen (18) angeordnet und in mehrere Gestängesegmente (32) unterteilt ist, welche über aufrechte Achsen (36) verschwenkbar zueinander und/oder zum Rahmen (18) angeordnet sind, wobei zum Verschwenken zumindest ein von einer elektronischen Regeleinrichtung (42) ansteuerbares motorisches Stellglied (40) vorgesehen ist,
umfassend die Verfahrensschritte:
- einer Erfassung und Weiterleitung eines Istwertes bezüglich einer Ausrichtung der Verteilvorrichtung (30) und/oder der Gestängesegmente (32) mittels des Stellgliedes (40) oder der Stellglieder (40) und/oder mittels den aufrechten Achsen (36) und/oder dem zumindest einen Stellglied (40) zugeordneter Sensoren (60),
- einer Erfassung und/oder Auswertung einer Randstruktur (50) einer von der landwirtschaftlichen Verteilmaschine (10) zu bearbeitenden und/oder zu überfahrenden Fläche mittels der Verteilmaschine (10) zugeordneten und/oder mit der Regeleinrichtung (42) in Verbindung stehenden Konturermittlungseinrichtungen (58),
**dadurch gekennzeichnet, dass** die jeweilige Randstruktur (50) auf Basis eine mit einem Gyroskop ermittelten Kurvenradius und eines in der Regeleinrichtung (42) hinterlegten Steuerungsprogramms berechnet wird,
- und dass eine Ansteuerung des zumindest einen Stellglieds (40) in Abhängigkeit von der erfassten Ausrichtung der Verteilvorrichtung (30) und/oder der Gestängesegmente (32) sowie in Abhängigkeit von der jeweils vorhandenen oder erfassten Randstruktur (50) erfolgt.

15. Verfahren nach Anspruch 14, **dadurch gekennzeichnet, dass** mittels eines in der
Regeleinrichtung (42) hinterlegten Steuerungsprogramm unter Berücksichtigung der Istwerte der Ausrichtung und der vorhandenen Randstruktur (50) eine Berechnung zur Ansteuerung des zumindest einen Stellglieds (40) erfolgt.

16. Verfahren nach Anspruch 14 oder 15, **dadurch gekennzeichnet, dass** mittels des zumindest einen Stellgliedes (40) die Gestängesegmente (32) und/oder die Verteilvorrichtung (30) derartig verschwenkt werden, dass diese eine zumindest weitgehend parallele und/oder rechtwinkelige Ausrichtung zur Randstruktur (50) aufweisen.

17. Verfahren nach einem der Ansprüche 14 bis 16, **dadurch gekennzeichnet, dass** zur Erfassung der Ausrichtung der Verteilmaschine (10) ein Winkelsensor zwischen einem Zugfahrzeug (46) und der Verteilmaschine (10) angeordnet ist und/oder dass die Verteilmaschine (10) Lenkwinkelsensoren aufweist.

18. Verfahren nach einem der Ansprüche 14 bis 17, **dadurch gekennzeichnet, dass** eine Steuerung des zumindest einen Stellglieds (40) durch eine Rückwärtsfahrt aktiviert und durch eine Vorwärtsfahrt deaktiviert wird und/oder dass eine Ansteuerung des zumindest einen Stellglieds (40) auf Basis von Fahrbewegungen der Verteilmaschine (10) erfolgt.

19. Verfahren nach einem der Ansprüche 14 bis 18, **dadurch gekennzeichnet, dass** die Verfahrgeschwindigkeit des zumindest einen Stellglieds (40) in Abhängigkeit der Fahrgeschwindigkeit und/oder der Ausbringmenge und/oder der aktuellen Ausrichtung vergrößert oder verringert wird.

20. Verfahren nach einem der Ansprüche 14 bis 19, **dadurch gekennzeichnet, dass** als Konturermittlungseinrichtung ein GPS-System und/oder ein Laserscanner und/oder eine Kamera und/oder ein Kamerasystem und/oder ein Radarsensor verwendet werden.

21. Verfahren nach einem der Ansprüche 14 bis 20, **dadurch gekennzeichnet, dass** in der Regeleinrichtung (42) Karten der jeweiligen Ackerfläche hinterlegt sind.

22. Verfahren nach einem der Ansprüche 14 bis 21, **dadurch gekennzeichnet, dass** die Regeleinrichtung (42) die jeweiligen Randstrukturen (50) aus einer Datenbank ausliest.

23. Verfahren nach einem der Ansprüche 14 bis 22, **dadurch gekennzeichnet, dass** in Abhängigkeit der erfassten Ausrichtung und der vorhandenen Randstruktur (50) die Ansteuerung der Teilbreiten der Verteilvorrichtung (30) erfolgt und/oder dass in Abhängigkeit der erfassten Ausrichtung und der vorhandenen Randstruktur (50) die Ausbringmengen der Teilbreiten der Verteilvorrichtung (30) geregelt werden und/oder dass in Abhängigkeit der erfassten Ausrichtung und der vorhandenen Randstruktur (50) verschiedene Spritzmuster erzeugt werden.

24. Verfahren nach einem der Ansprüche 14 bis 23, **dadurch gekennzeichnet, dass** die Verteilvorrichtung (30) quer zur Fahrrichtung (28) verschwenkt werden kann, wobei ein Verschwenken auf Basis einer vorhandenen Randstruktur (50) erfolgt.

## Claims

1. An agricultural distribution machine (10), with at least one frame (18), one storage hopper (24) or a plurality of storage hoppers (24), and a distribution apparatus (30) for spreading liquids and/or granular and/or granulated materials, wherein the distribution apparatus (30) is arranged to be movable on the frame (18) and is subdivided into a plurality of linkage segments (32), which are arranged to be pivotable relative to one another and/or relative to the frame (18) via upright axles (36),
- wherein at least one motorised actuator (40) that is activable by an electronic adjustment device (42) is provided for the pivoting of the linkage segments (32),
- and wherein sensors (60) for the detection and transmission of an actual value regarding the alignment of the linkage segments (32) and/or of the distribution apparatus (30) and/or of the upright axles (36) and/or of the actuator (40) are assigned to the linkage segments (32) and/or to the distribution apparatus (30) and/or to the upright axles (36) and/or to the at least one actuator (40),
wherein contour detection devices (58) are provided for the detection and/or evaluation of a boundary structure (50) of an area to be tilled and/or traversed by the agricultural distribution machine (10), which contour detection devices (58) are assigned to the agricultural distribution machine (10) and/or are connected to the adjustment device (42),
**characterised in that** the particular boundary structure (50) is calculable on the basis of a curve radius determined with a gyroscope and of a control program stored in the adjustment device (42),
and **in that** an activation of the at least one actuator (40) is provided or carried out based on a detected alignment of the distribution apparatus (30) and/or of the linkage segments (32) and on the detected or present boundary structure (50).

2. The agricultural distribution machine according to claim 1, **characterised in that** the linkage segments (32) and/or the distribution apparatus (30) are pivotable or pivoted by means of the at least one actuator (40) in such a manner that the linkage segments (32) and/or the distribution apparatus (30) have an at least largely or approximately parallel and/or perpendicular alignment to the boundary structure (50).

3. The agricultural distribution machine according to claim 1 or 2, **characterised in that** the activation of a steering mechanism or steering device of the distribution machine (10) is carried out based on the detected alignment and on the present boundary structure (50).

4. The agricultural distribution machine according to claim 1 or 2, **characterised in that** an angle sensor for the detection of the alignment of the distribution machine (10) and/or of the frame (18) is arranged between a towing vehicle (46) and the distribution machine (10), and/or **in that** the distribution machine (10) has steering angle sensors.

5. The agricultural distribution machine according to one of the previous claims, **characterised in that** a calculation for the activation of the at least one actuator (40) is carried out by means of a control program stored in the adjustment device (42) in consideration of the actual values of the alignment and of the present boundary structure (50).

6. The agricultural distribution machine according to one of the previous claims, **characterised in that** an activation of the at least one actuator (40) is activated by a backward drive and deactivated by a forward drive, and/or **in that** an activation of the at least one actuator (40) is carried out on the basis of driving movements of the distribution machine (10).

7. The agricultural distribution machine according to one of the previous claims, **characterised in that** the parallel alignment is carried out in such a manner that at least one linkage segment (32) and the boundary structure (50) overlap or have a defined distance to each other.

8. The agricultural distribution machine according to one of the previous claims, **characterised in that** the parallel and/or perpendicular alignment have a definable offset.

9. The agricultural distribution machine according to one of the previous claims, **characterised in that** a GPS system and/or a laser scanner and/or a camera and/or a camera system and/or a radar sensor are usable as a contour detection device (58).

10. The agricultural distribution machine according to one of the previous claims, **characterised in that** maps of the particular field are stored in the adjustment device (42).

11. The agricultural distribution machine according to one of the previous claims, **characterised in that** the adjustment device (42) reads out the particular boundary structures (50) from a database.

12. The agricultural distribution machine according to one of the previous claims, **characterised in that** the activation of the partial widths of the distribution apparatus (30) is carried out based on the detected alignment and/or on the present boundary structure (50), and/or **in that** the spreading quantities of the partial widths of the distribution apparatus (30) are adjusted based on the detected alignment and/or on the present boundary structure (50), and/or **in that** different spray patterns are generatable based on the detected alignment and on the present boundary structure (50).

13. The agricultural distribution machine (10) according to one of the previous claims, **characterised in that** the distribution apparatus (30) can be pivoted transverse to the driving direction (28), wherein a pivoting is carried out based on a present boundary structure (50).

14. A method for the control and/or adjustment of an agricultural distribution machine (10), with at least one frame (18), one storage hopper (24) or a plurality of storage hoppers (24), and a distribution apparatus (30) for spreading liquids and/or granular or granulated materials, wherein the distribution apparatus (30) is arranged to be movable on the frame (18) and is subdivided into a plurality of linkage segments (32), which are arranged to be pivotable relative to one another and/or relative to the frame (18) via upright axles (36), wherein at least one motorised actuator (40) that is activable by an electronic adjustment device (42) is provided for the pivoting,
the method comprising the method steps:
- a detection and transmission of an actual value regarding an alignment of the distribution apparatus (30) and/or of the linkage segments (32) by means of the actuator (40) or the actuators (40) and/or by means of the upright axles (36) and/or by means of sensors (60) assigned to the at least one actuator (40),
- a detection and/or evaluation of a boundary structure (50) of an area to be tilled and/or traversed by the agricultural distribution machine (10) by means of contour detection devices (58) assigned to the distribution machine (10) and/or in communication with the adjustment device (42),
**characterised in that** the particular boundary structure (50) is calculated on the basis of a curve radius determined with a gyroscope and of a control program stored in the adjustment device (42),
- and **in that** an activation of the at least one actuator (40) is carried out based on the detected alignment of the distribution apparatus (30) and/or of the linkage segments (32) and based on the in each case present or detected boundary structure (50).

15. The method according to claim 14, **characterised in that** a calculation for the activation of the at least one actuator (40) is carried out by means of a control program stored in the adjustment device (42) in consideration of the actual values of the alignment and of the present boundary structure (50).

16. The method according to claim 14 or 15, **characterised in that** the linkage segments (32) and/or the distribution apparatus (30) are pivoted by means of the at least one actuator (40) in such a manner that the linkage segments (32) and/or the distribution apparatus (30) have an at least largely parallel and/or perpendicular alignment to the boundary structure (50).

17. The method according to one of the claims 14 to 16, **characterised in that** an angle sensor for the detection of the alignment of the distribution machine (10) is arranged between a towing vehicle (46) and the distribution machine (10), and/or **in that** the distribution machine (10) has steering angle sensors.

18. The method according to one of the claims 14 to 17, **characterised in that** a control of the at least one actuator (40) is activated by a backward drive and deactivated by a forward drive, and/or **in that** an activation of the at least one actuator (40) is carried out on the basis of driving movements of the distribution machine (10).

19. The method according to one of the claims 14 to 18, **characterised in that** the movement speed of the at least one actuator (40) is increased or reduced based on the driving speed and/or on the spreading quantity and/or on the current alignment.

20. The method according to one of the claims 14 to 19, **characterised in that** a GPS system and/or a laser scanner and/or a camera and/or a camera system and/or a radar sensor are used as a contour detection device.

21. The method according to one of the claims 14 to 20, **characterised in that** maps of the particular field are stored in the adjustment device (42).

22. The method according to one of the claims 14 to 21, **characterised in that** the adjustment device (42) reads out the particular boundary structures (50) from a database.

23. The method according to one of the claims 14 to 22, **characterised in that** the activation of the partial widths of the distribution device (30) is carried out based on the detected alignment and on the present boundary structure (50), and/or **in that** the spreading quantities of the partial widths of the distribution apparatus (30) are adjusted based on the detected alignment and on the present boundary structure (50), and/or **in that** different spray patterns are generated based on the detected alignment and on the present boundary structure (50).

24. The method according to one of the claims 14 to 23, **characterised in that** the distribution apparatus (30) can be pivoted transverse to the driving direction (28), wherein a pivoting is carried out on the basis of a present boundary structure (50).

## Revendications

1. Épandeur agricole (10) doté d'au moins un châssis (18), d'un réservoir (24) ou de plusieurs réservoirs (24) ainsi que d'un dispositif d'épandage (30) destiné à l'épandage de liquides et/ou de matières granuleuses et/ou granulées, ledit dispositif d'épandage (30) étant agencé de manière mobile sur le châssis (18) et divisé en plusieurs segments de timonerie (32) qui sont agencés de manière pivotante les uns par rapport aux autres et/ou par rapport au châssis (18) dans des axes verticaux (36),
- au moins un actionneur (40) motorisé pouvant être commandé par un dispositif de régulation électronique (42) étant prévu pour le pivotement des segments de timonerie (32), et
- des capteurs (60) étant associés aux segments de timonerie (32) et/ou au dispositif d'épandage (30) et/ou aux axes verticaux (36) et/ou audit au moins un actionneur (40) pour détecter et transmettre une valeur réelle relative à l'orientation des segments de timonerie (32) et/ou du dispositif d'épandage (30) et/ou des axes verticaux (36) et/ou de l'actionneur (40),
des dispositifs de détection de contours (58), qui sont associés à l'épandeur agricole (10) et/ou qui sont en liaison avec le dispositif de régulation (42), étant prévus pour détecter et/ou évaluer une structure périphérique (50) d'une surface à traiter et/ou à traverser par l'épandeur agricole (10),
**caractérisé en ce que** chaque structure périphérique (50) peut être calculée à l'aide d'un rayon de courbure déterminé à l'aide d'un gyroscope et d'un programme de commande intégré au dispositif de régulation (42),
et qu'une commande dudit au moins un actionneur (40) est prévue ou s'effectue en fonction d'une orientation détectée de l'épandeur agricole (30) et/ou des segments de timonerie (32) et de la structure périphérique (50) détectée ou existante.

2. Épandeur agricole selon la revendication 1, **caractérisé en ce que**, à l'aide dudit au moins un actionneur (40), les segments de timonerie (32) et/ou le dispositif d'épandage (30) peuvent être ou sont pivotés de telle sorte qu'ils présentent une orientation au moins largement ou approximativement parallèle et/ou perpendiculaire à la structure périphérique (50).

3. Épandeur agricole selon la revendication 1 ou 2, **caractérisé en ce qu'**une commande d'une direction ou d'un dispositif de direction de l'épandeur agricole (10) s'effectue en fonction de l'orientation détectée et de la structure périphérique (50) existante.

4. Épandeur agricole selon la revendication 1 ou 2, **caractérisé en ce qu'**un capteur d'angle est agencé entre un véhicule tracteur (46) et l'épandeur (10) pour détecter l'orientation de l'épandeur (10) et/ou du châssis (18), et/ou que l'épandeur (10) présente des capteurs d'angle de direction.

5. Épandeur agricole selon l'une quelconque des revendications précédentes, **caractérisé en ce qu'**un calcul pour commander ledit au moins un actionneur (40) s'effectue au moyen d'un programme de commande intégré au dispositif de régulation (42) en prenant en compte des valeurs réelles de l'orientation et de la structure périphérique (50) existante.

6. Épandeur agricole selon l'une quelconque des revendications précédentes, **caractérisé en ce qu'**une commande dudit au moins un actionneur (40) est activée par l'intermédiaire d'un fonctionnement en marche arrière et désactivée par l'intermédiaire d'un fonctionnement en marche avant, et/ou qu'une commande dudit au moins un actionneur (40) s'effectue sur la base de mouvements de marche de l'épandeur (10).

7. Épandeur agricole selon l'une quelconque des revendications précédentes, **caractérisé en ce que** l'orientation parallèle s'effectue de telle sorte qu'au moins un segment de timonerie (32) et la structure périphérique (50) sont superposés ou espacés l'un de l'autre d'une distance définie.

8. Épandeur agricole selon l'une quelconque des revendications précédentes, **caractérisé en ce que** l'orientation parallèle et/ou perpendiculaire présente un décalage définissable.

9. Épandeur agricole selon l'une quelconque des revendications précédentes, **caractérisé en ce qu'**un système GPS et/ou un scanner laser et/ou une caméra et/ou un système de caméra et/ou un capteur radar peuvent être utilisés comme dispositif de détermination de contour (58).

10. Épandeur agricole selon l'une quelconque des revendications précédentes, **caractérisé en ce que** des cartes des différentes surfaces arables sont enregistrées dans le dispositif de régulation (42).

11. Épandeur agricole selon l'une quelconque des revendications précédentes, **caractérisé en ce que** le dispositif de régulation (42) lit les différentes structures périphériques (50) à partir d'une banque de données.

12. Épandeur agricole selon l'une quelconque des revendications précédentes, **caractérisé en ce qu'**une commande des largeurs partielles du dispositif d'épandage (30) s'effectue en fonction de l'orientation détectée et/ou de la structure périphérique (50) existante, et/ou que les quantités d'épandage des largeurs partielles du dispositif d'épandage (30) sont réglées en fonction de l'orientation détectée et/ou de la structure périphérique (50) existante, et/ou que des modèles de pulvérisation différents peuvent être générés en fonction de l'orientation détectée et de la structure périphérique (50) existante.

13. Épandeur agricole (10) selon l'une quelconque des revendications précédentes, **caractérisé en ce que** le dispositif d'épandage (30) peut être pivoté à la transversale du sens de marche (28), un pivotement s'effectuant sur la base d'une structure périphérique (50) existante.

14. Procédé de commande et/ou de réglage d'un épandeur agricole (10) doté d'au moins un châssis (18), d'un réservoir (24) ou de plusieurs réservoirs (24) ainsi que d'un dispositif d'épandage (30) destiné à l'épandage de liquides et/ou de matières granuleuses ou granulées, ledit dispositif d'épandage (30) étant agencé de manière mobile au châssis (18) et divisé en plusieurs segments de timonerie (32) qui sont agencés de manière pivotante dans des axes verticaux (36) les uns par rapport aux autres et/ou par rapport au châssis (18), au moins un actionneur motorisé (40) pouvant être commandé par un dispositif de régulation (42) électronique étant prévu pour le pivotement,
comprenant les étapes de procédé :
- d'une détection et transmission d'une valeur réelle relative à une orientation du dispositif d'épandage (30) et/ou des segments de timonerie (32) à l'aide de l'actionneur (40) ou des actionneurs (40) et/ou par l'intermédiaire des axes verticaux (36) et/ou des capteurs (60) associés audit au moins un actionneur (40),
- d'une détection et/ou évaluation d'une structure périphérique (50) d'une surface à traiter et/ou à traverser par l'épandeur agricole (10) à l'aide de dispositifs de détection de contours (58) associés à l'épandeur (10) et/ou en liaison avec le dispositif de régulation (42),
**caractérisé en ce que** la structure périphérique (50) concernée est calculée sur la base d'un rayon de courbe déterminé à l'aide d'un gyroscope et d'un programme de commande intégré au dispositif de régulation (42),
- et qu'une commande dudit au moins un actionneur (40) s'effectue en fonction de l'orientation détectée du dispositif d'épandage (30) et/ou des segments de timonerie (32) ainsi qu'en fonction de la structure périphérique (50) existante respectivement ou détectée.

15. Procédé selon la revendication 14, **caractérisé en ce qu'**un calcul pour commander ledit au moins un actionneur (40) s'effectue au moyen d'un programme de commande intégré au dispositif de régulation (42) en tenant compte des valeurs réelles de l'orientation et de la structure périphérique (50) existante.

16. Procédé selon la revendication 14 ou 15, **caractérisé en ce que**, à l'aide dudit au moins un actionneur (40), les segments de timonerie (32) et/ou le dispositif d'épandage (30) sont pivotés de telle sorte qu'ils présentent une orientation au moins largement parallèle et/ou perpendiculaire à la structure périphérique (50).

17. Procédé selon l'une quelconque des revendications 14 à 16, **caractérisé en ce qu'**un capteur d'angle est agencé entre un véhicule tracteur (46) et l'épandeur (10) pour détecter l'orientation de l'épandeur (10), et/ou que l'épandeur (10) présente des capteurs d'angle de direction.

18. Procédé selon l'une quelconque des revendications 14 à 17, **caractérisé en ce qu'**une commande dudit au moins un actionneur (40) est activée par l'intermédiaire d'un fonctionnement en marche arrière et désactivée par l'intermédiaire d'un fonctionnement en marche avant, et/ou qu'une commande dudit au moins un actionneur (40) s'effectue sur la base de mouvements de marche de l'épandeur (10).

19. Procédé selon l'une quelconque des revendications 14 à 18, **caractérisé en ce que** la vitesse de fonctionnement dudit au moins un actionneur (40) est augmentée ou diminuée en fonction de la vitesse de marche et/ou de la quantité d'épandage et/ou de l'orientation actuelle.

20. Procédé selon l'une quelconque des revendications 14 à 19, **caractérisé en ce qu'**un système GPS et/ou un scanner laser et/ou une caméra et/ou un système de caméra et/ou un capteur radar peuvent être utilisés comme dispositif de détermination de contour.

21. Procédé selon l'une quelconque des revendications 14 à 20, **caractérisé en ce que** des cartes des différentes surfaces arables sont enregistrées dans le dispositif de régulation (42).

22. Procédé selon l'une quelconque des revendications 14 à 21, **caractérisé en ce que** le dispositif de régulation (42) lit les différentes structures périphériques (50) à partir d'une banque de données.

23. Procédé selon l'une quelconque des revendications 14 à 22, **caractérisé en ce que** la commande des largeurs partielles du dispositif d'épandage (30) s'effectue en fonction de l'orientation détectée et de la structure périphérique (50) existante, et/ou que les quantités d'épandage des largeurs partielles du dispositif d'épandage (30) sont réglées en fonction de l'orientation détectée et de la structure périphérique (50) existante, et/ou que des modèles de pulvérisation différents sont générés en fonction de l'orientation détectée et de la structure périphérique (50) existante.

24. Procédé selon l'une quelconque des revendications 14 à 23, **caractérisé en ce que** le dispositif d'épandage (30) peut être pivoté à la transversale du sens de marche (28), un pivotement s'effectuant sur la base d'une structure périphérique (50) existante.
